# EUROPÄISCHE PATENTANMELDUNG

(11) **EP 4 588 409 A1**
(43) Veröffentlichungstag der Anmeldung: **23.07.2025**
(21) Anmeldenummer: 25151158.0
(22) Anmeldetag: 10.01.2025
(51) Int. Cl.: A47J 43/07

(54) **KÜCHENGERÄT MIT SPIRALSCHNEIDER**

(30) Priorität: 17.01.2024 CN 202410069233
(71) Anmelder: Vorwerk & Co. Interholding GmbH, 42275 Wuppertal (DE)
(72) Erfinder: SICKERT, Michael, 42275 Wuppertal (DE); HOFFMANN, Sabrina, 42287 Wuppertal (DE); HEYNEN, Andreas, 42287 Wuppertal (DE); LESSEL, Thomas, 42287 Wuppertal (DE); LIU, Joel, Shanghai, 201700 (CN); XU, Alan, Shanghai, 201700 (CN)
(74) Vertreter: Gille Hrabal Partnerschaftsgesellschaft mbB Patentanwälte

(57) **Zusammenfassung**

Die Erfindung betrifft ein Küchengerät (30) mit einem Zubereitungsgefäß (31), einem Deckel (32), der auf das Zubereitungsgefäß (31) aufgesetzt werden kann, einem Werkzeug, das anstelle des Deckels (32) auf das Zubereitungsgefäß (31) aufgesetzt werden kann, wobei das Werkzeug ein erstes Teil und ein zweites Teil umfasst, einer Verriegelungseinrichtung für ein Verriegeln des auf das Zubereitungsgefäß (31) aufgesetzten Deckels (32) sowie für ein Verriegeln des auf das Zubereitungsgefäß (31) aufgesetzten Werkzeugs, einem Sensor (34), der ausgelöst ist, wenn der aufgesetzte Deckel (32) durch die Verriegelungseinrichtung oder durch das aufgesetzte Werkzeug verriegelt ist, wobei der Sensor (34) nicht ausgelöst ist, wenn nur ein Teil des Werkzeugs auf das Zubereitungsgefäß (31) aufgesetzt und verriegelt ist. Das Werkzeug umfasst einen Spiralschneider.

Die Erfindung betrifft außerdem einen Gemüseschneider mit dem Spiralschneider.

Durch die Erfindung können Zoodles hergestellt werden.

## Beschreibung

Die Erfindung betrifft ein Küchengerät für die Zubereitung von Lebensmitteln. Das Küchengerät kann ein Zubereitungsgefäß umfassen, in dem Lebensmittel zubereitet werden können. Das Küchengerät kann einen Deckel für das Zubereitungsgefäß umfassen. Das Küchengerät kann eine Verriegelungseinrichtung für das Verriegeln des Deckels umfassen, wenn der Deckel auf das Zubereitungsgefäß aufgesetzt ist. Das Küchengerät kann einen Sensor umfassen, der ausgelöst ist, wenn die Verriegelungseinrichtung den aufgesetzten Deckel verriegelt. Das Küchengerät kann ein mehrteiliges Anbauteil umfassen. Die Erfindung betrifft außerdem einen Gemüseschneider für das Küchengerät sowie ein Werkzeug mit dem Gemüseschneider.

Elektrisch betriebene Küchengeräte mit einem Zubereitungsgefäß und einem Deckel für das Zubereitungsgefäß sind aus den Druckschriften DE 10 2014 111 193 A1 sowie DE 10 2017 121 946 A1 bekannt. Der auf das Zubereitungsgefäß aufgesetzte Deckel kann mit einer elektrisch betriebenen Verriegelungseinrichtung verriegelt werden. Ist der Deckel verriegelt, kann dieser nicht mehr von dem Zubereitungsgefäß gelöst werden. Für ein Lösen muss erst die Verriegelungseinrichtung entriegelt werden.

Mithilfe von einem Sensor kann bei einem solchen Küchengerät überprüft werden, ob der Deckel auf das Zubereitungsgefäß aufgesetzt und ordnungsgemäß verriegelt ist. In Abhängigkeit davon kann der weitere Betrieb des Küchengeräts gesteuert werden. Küchengeräte mit Sensoren zur Überprüfung einer Verriegelung eines aufgesetzten Deckels werden unter der Marke Thermomix^{®} von der Fa. Vorwerk Deutschland Stiftung & Co. KG, Wuppertal, Deutschland, vertrieben.

Ein Werkzeug zum Schneiden von Gemüse ist aus der Druckschrift FR 3 069 143 A1 bekannt. Die Druckschrift EP 4119016 A1 offenbart ein Küchengerät mit Gemüseschneidwerkzeug.

Gemüse kann auf verschiedene Weise geschnitten werden. Durch Schneiden können beispielsweise aus Zucchinis Zoodles hergestellt werden. Der Begriff "Zoodles" ist eine Kombination der Wörter "Zucchini" und "Noodles" (Nudeln). Um Zoodles herzustellen, wird eine Zucchini mit einem Spiralschneider in lange, dünne Streifen oder Spiralen geschnitten, die dann wie Nudeln verwendet werden können.

Es ist Aufgabe der Erfindung, ein Küchengerät mit Gemüseschneidwerkzeug weiterzuentwickeln.

Die Aufgabe der Erfindung wird durch ein Küchengerät mit den Merkmalen des ersten Anspruchs gelöst. Der Nebenanspruch betrifft ein Werkzeug für das Küchengerät. Vorteilhafte Ausgestaltungen ergeben sich aus den abhängigen Ansprüchen.

Ein Küchengerät kann zur Lösung der Aufgabe ein Zubereitungsgefäß umfassen. Das Küchengerät kann einen Deckel umfassen, der auf das Zubereitungsgefäß aufgesetzt werden kann. Das Küchengerät kann ein Werkzeug umfassen, das anstelle des Deckels auf das Zubereitungsgefäß aufgesetzt werden kann. Das Werkzeug kann einen Spiralschneider umfassen. Das Werkzeug ist dann ein Werkzeug für ein Schneiden von Gemüse und folglich ein Gemüseschneidwerkzeug. Das Werkzeug kann wenigstens zwei Teile umfassen. Das Küchengerät kann eine Verriegelungseinrichtung für ein Verriegeln eines auf das Zubereitungsgefäß aufgesetzten und/oder eines auf dem Zubereitungsgefäß aufgesetzten Deckels umfassen. Das Küchengerät kann einen Sensor umfassen, der ausgelöst ist, wenn der aufgesetzte Deckel durch die Verriegelungseinrichtung oder durch das aufgesetzte Werkzeug verriegelt ist. Der Sensor ist nicht ausgelöst, wenn nur ein Teil des Werkzeugs auf das Zubereitungsgefäß aufgesetzt und verriegelt ist.

Ein erfindungsgemäßes Küchengerät ist ein elektrisches Gerät, also ein Gerät, das für seinen Betrieb elektrischen Strom benötigt. Ein erfindungsgemäßes Küchengerät ist ein Gerät, mit dem zumindest ein Schritt einer Zubereitung eines Lebensmittels durchgeführt werden kann, wie zum Beispiel Mischen, Zerkleinern, Befeuchten, Trocknen, Kühlen oder Erhitzen. Durch das Küchengerät kann also zumindest ein Lebensmittel beispielsweise gemischt, zerkleinert, befeuchtet, getrocknet, gekühlt und/oder erhitzt werden. Beispiele für Lebensmittel sind Zucchini, Kartoffeln, Möhren, Erbsen oder Zwiebeln.

Das Zubereitungsgefäß ist für die Zubereitung von Lebensmitteln vorgesehen. Lebensmittel, die sich unmittelbar in dem Zubereitungsgefäß befinden, können beispielsweise durch ein drehbares Mischwerkzeug zerkleinert werden. Das Zubereitungsgefäß kann Heizelemente umfassen, um Lebensmittel in dem Zubereitungsgefäß erhitzen zu können. Das Küchengerät kann aber auch Heizelemente für ein Erhitzen des Zubereitungsgefäßes umfassen, die getrennt von dem Zubereitungsgefäß vorhanden sind. Ein Basisteil des Küchengeräts kann eine Aufnahme umfassen, die die Position des Zubereitungsgefäßes festlegen kann. Die Aufnahme kann eine gefäßartige Vertiefung sein, in die das Zubereitungsgefäß eingesetzt werden kann oder eingesetzt ist. Die Aufnahme kann eine Ablauföffnung umfassen, durch die vermieden wird, dass sich Flüssigkeit in der Aufnahme ansammeln kann. Insbesondere kann das Zubereitungsgefäß von der Ausnehmung abgenommen und so von dem Basisteil des Küchengeräts getrennt werden.

Das Zubereitungsgefäß umfasst eine Öffnung. Der Deckel kann auf das Zubereitungsgefäß so aufgesetzt werden, dass die Öffnung dann durch den Deckel abgedeckt ist.

Das Werkzeug unterscheidet sich vom Deckel durch seine Funktion. Die Funktion des Deckels besteht darin, dass Zubereitungsgefäß vollständig oder zumindest weitgehend vollständig verschließen zu können. Das Werkzeug kann auf andere Weise zur Zubereitung einer Speise beitragen. Beispielsweise kann das Werkzeug ein Lebensmittel zerkleinern. Das Werkzeug kann beispielsweise Stücke aus einem Lebensmittel herausschneiden. Da der Deckel nicht zerkleinern kann, unterscheidet sich die Funktion des Deckels von der Funktion des Werkzeugs.

Es ist nicht ausgeschlossen, dass das Werkzeug ebenfalls das Zubereitungsgefäß vollständig oder zumindest nahezu vollständig verschließen kann. Ein Werkzeug im Sinne der vorliegenden Erfindung muss aber zumindest eine zusätzliche Funktion im Vergleich zum Deckel erfüllen können.

Das Werkzeug umfasst ein erstes Teil und ein zweites Teil, wenn die beiden Teile voneinander zerstörungsfrei gelöst und wieder zusammengesetzt werden können. Für ein Lösen ist kein Werkzeug erforderlich. Ein jedes Teil kann teilweise oder vollständig aus Kunststoff gefertigt sein. Ein jedes Teil kann in einem Stück hergestellt worden sein, also einstückig sein.

Es ist möglich, dass die zumindest zwei Teile des Werkzeugs so zusammengesetzt werden können, sodass diese im Anschluss daran beispielsweise durch eine Rastverbindung miteinander verbunden sind. Um die beiden Teile dann wieder voneinander zu lösen, muss erst die Rastverbindung gelöst werden. Ist die Rastverbindung gelöst, so sind die beiden Teile nicht im Sinne der vorliegenden Erfindung zusammengesetzt. Eine solche Rastverbindung kann beispielsweise einen Riegel umfassen, der in eine verriegelte Position und in eine entriegelte Position bewegt werden kann. In der verriegelten Position kann der Riegel dann verrastet sein, sodass dieser sich nicht unplanmäßig aus der entriegelten Position wegbewegen kann.

Es ist möglich, dass die beiden Teile nur lose zusammengesetzt werden können. Ein Beispiel für ein loses Zusammensetzen liegt vor, wenn das eine erste Teil in eine dafür vorgesehene Aufnahme des zweiten Teils eingesetzt werden kann. Ist das erste Teil in die dafür vorgesehene Aufnahme des zweiten Teils eingesetzt, so sind dann die beiden Teile im Sinne der vorliegenden Erfindung zusammengesetzt. Die beiden Teile sind dann im Sinne der vorliegenden Erfindung nur lose zusammengesetzt, weil ein Anheben des ersten Teils genügt, um dieses vom zweiten Teil zu lösen. Es gibt im Fall eines losen Zusammensetzens also kein Verbindungsmittel, das für eine feste mechanische Verbindung zwischen den beiden Teilen sorgt und welches erst gelöst werden muss, um die beiden Teile voneinander trennen zu können.

Das Werkzeug kann mehr als zwei Teile umfassen, die zum Werkzeug zusammengesetzt werden können und die ohne Werkzeug wieder voneinander gelöst werden können.

Ein Spiralschneider ist ein Schneidgerät, das verwendet wird, um Gemüse in spiralförmige Streifen oder Scheiben zu schneiden. Ein Spiralschneider wird gedreht, um die gewünschte Form zu erzeugen. Spiralschneider sind besonders beliebt für die Zubereitung von Zoodles, also Zucchininudeln, aber sie können auch für andere Lebensmittel wie Karotten, Gurken oder Kartoffeln verwendet werden. Auch Obst kann durch einen Spiralschneider geschnitten werden.

Die Verriegelungseinrichtung kann den Deckel verriegeln, wenn der Deckel auf das Zubereitungsgefäß aufgesetzt ist. Ist der Deckel verriegelt, so kann der Deckel nicht mehr von dem Zubereitungsgefäß gelöst werden. Soll der Deckel von dem Zubereitungsgefäß gelöst werden, so muss die Verriegelungseinrichtung erst entriegelt werden.

Ist anstelle des Deckels das Werkzeug auf das Zubereitungsgefäß aufgesetzt worden, so kann die Verriegelungseinrichtung das Werkzeug verriegeln. Für ein Lösen des Werkzeugs vom Zubereitungsgefäß ist es dann ebenfalls erforderlich, zunächst die Verriegelungseinrichtung zu entriegeln. Dies gilt zumindest für zwei Teile des Werkzeugs. Umfasst das Werkzeug mehr als zwei Teile, so ist es nicht erforderlich, dass kein Teil des Werkzeugs gelöst werden kann, wenn die Verriegelungseinrichtung das Werkzeug verriegelt. Es kann also beispielsweise sein, dass das Werkzeug vier Teile umfasst. Ist das Werkzeug verriegelt, so können beispielsweise drei Teile nicht gelöst werden, aber das vierte Teil. Es ist aber auch möglich, dass das Werkzeug so beschaffen ist, dass sämtliche vier Teile nicht gelöst werden können, wenn das Werkzeug durch die Verriegelungseinrichtung verriegelt worden ist. Es kann beispielsweise sein, dass das Werkzeug fünf Teile umfasst. Ist das Werkzeug verriegelt, so können beispielsweise vier Teile nicht gelöst werden, aber das fünfte Teil.

Der Spiralschneider kann einen Konus förmigen Grund aufweisen. Der Spiralschneider kann eine Klinge aufweisen, mit der ein Lebensmittel, insbesondere Gemüse, in Streifen oder Scheiben geschnitten werden kann. An die Klinge kann eine Öffnung angrenzen. Ein Lebensmittel, das mit der Klinge geschnitten worden ist, kann den Grund des Spiralschneiders durch die Öffnung hindurch passieren.

Die Öffnung des Spiralschneiders kann L-förmig sein. Ein Schenkel der L-Form kann an den Außenrand des Grunds angrenzen. Diese Form einer Öffnung ist günstig, um mit einem spiralförmigen Schneiden eines Lebensmittels beginnen zu können.

Der Spiralschneider kann Teil eines Gemüseschneiders sein. Mit Gemüseschneider ist eine Vorrichtung gemeint, durch die außer dem Spiralschneider weitere Komponenten aufweist, um mit dem Spiralschneider zum Beispiel Gemüse schneiden zu können. Ein umlaufender Innenrand des Spiralschneiders kann auf einer beispielsweise zylinderförmigen Erhebung des Gemüseschneiders aufsitzen, um den Spiralschneider drehbar zu lagern.

Der Gemüseschneider kann eine Basis umfassen, auf der Komponenten für den Betrieb aufgebracht sein können. Auf der Basis kann beispielsweise die genannte zylinderförmige Erhebung befestigt sein, durch die der Spiralschneider drehbar gelagert wird. Alternativ kann die Basis eine Öffnung aufweisen, in die der Spiralschneider für eine drehbare Lagerung eingesetzt werden kann. Die Öffnung kann kreisrund sein, um einen im Querschnitt kreisrunden Spiralschneider drehbar lagern zu können. An der Basis kann ein Griff angebracht sein, um den Gemüseschneider leicht ergreifen und entfernen zu können. Die Basis kann eine Platte sein. Die Platte kann eben sein, um die Bauhöhe gering halten zu können.

Der Gemüseschneider kann eine Welle für den Antrieb des Spiralschneiders umfassen. Die Welle kann neben dem Spiralschneider angeordnet sein. Die Welle kann mittig durch die Basis hindurchführen. Der Spiralschneider ist dann außer mittig angeordnet. Hierdurch wird erreicht, dass der Spiralschneider unabhängig von einer Welle geformt sein kann. Ein Spiralschneider kann dann besser geeignet konstruiert werden, um eine Spirale aus einem Lebensmittel herausschneiden zu können. Außerdem ist es dadurch möglich, ein Getriebe zu integrieren. Der Spiralschneider kann dann über die Welle und das Getriebe so angetrieben werden, dass der Spiralschneider sich langsamer dreht als die Welle. Ein sich langsam drehender Spiralschneider ist günstig, um eine Spirale aus einem Lebensmittel herausschneiden zu können. Eine sich im Vergleich dazu schnelldrehende Welle ist günstig, um das Küchengerät auch für andere Aufgaben wie zum Beispiel für ein Zerhacken von Lebensmitteln oder ein Mischen von Lebensmitteln verwenden zu können.

Ein Getriebe kann durch zwei Zahnräder realisiert werden. Die Welle des Gemüseschneiders kann durch das eine Zahnrad hindurchführen. Zähne können am Außenumfang des Gemüseschneiders so angebracht sein, dass dadurch das andere Zahnrad bereitgestellt wird. Ist der Durchmesser des Zahnrades der Welle kleiner als der Durchmesser des Zahnrads des Gemüseschneiders, so wird sich die Welle schneller als der Gemüseschneider drehen. Alternativ kann eine Drehbewegung der Welle über ein kleines Rad der Welle auf ein großes Rad des Spiralschneiders durch einen Riemen oder durch eine Kette so übertragen werden, dass sich die Welle schneller drehen wird als der Gemüseschneider.

Die Übersetzung des Getriebes kann so sein, dass sich die Welle wenigstens 1,5mal wenigstens zweimal oder wenigstens dreimal schneller dreht als der Spiralschneider.

Die Welle kann an der Unterseite eine Kupplung aufweisen, um mittelbar oder unmittelbar mit einem Antrieb des Küchengeräts so verbunden werden zu können, dass der Antrieb die Welle drehen kann. Dafür kann beispielsweise genügen, dass die Kupplung auf einer darunter befindlichen Welle oder auf einem darunter befindlichen Mischwerkzeug des Küchengeräts so aufgesetzt werden kann, dass eine drehfeste Verbindung zwischen der darunter befindlichen Welle bzw. des darunter befindlichen Mischwerkzeugs und der Kupplung geschaffen wird. Durch das Aufsetzen kann außerdem erreicht werden, dass der Gemüseschneider auf einer dafür vorgesehenen Höhe gehalten werden kann. Möglich ist, dass die Kupplung beispielsweise mit einer darunter befindlichen Welle verrastet werden kann. Dies ist aber nicht erforderlich, um zuverlässig zum Beispiel Gemüse schneiden zu können.

Die Welle des Gemüseschneiders kann eine Hohlwelle sein. In die Hohlwelle kann ein Stab hineinreichen, um die Lage des Gemüseschneiders verbessert zu stabilisieren. Der Stab kann beispielsweise ein Stab des Werkzeugs sein. Eine darunter befindliche Welle kann einen Stab aufweisen, der während eines Betriebs in die Hohlwelle des Gemüseschneiders hineinreicht, um so die Lage des Gemüseschneiders zu stabilisieren.

An der Basis kann eine weitere zylinderförmige Erhebung für stabile, drehbare Lagerung der Welle des Gemüseschneiders befestigt sein. Die Welle kann eine Verbreiterung umfassen, die als Anschlag für ein Halten der Welle dienen kann. Die Verbreiterung kann beispielsweise an der Unterseite oder an der Oberseite der zylinderförmigen Erhebung anliegen, um so die Lage der Welle stabilisieren zu können. Die Verbreiterung kann ein Rad, beispielsweise ein Zahnrad, sein.

Die Verriegelungseinrichtung des Küchengeräts kann so beschaffen sein, dass das Werkzeug im aufgesetzten Zustand durch das Verriegeln von einer Ausgangsstellung in eine Endstellung bewegt wird, und der Sensor ausgelöst ist, wenn sich das Werkzeug in der Endstellung befindet.

Die Verriegelungseinrichtung kann so beschaffen sein, dass das erste Teil des Werkzeugs durch das Verriegeln von der Ausgangsstellung in die Endstellung bewegt wird und das erste Teil so beschaffen ist, dass dieses durch das Verriegeln das zweite Teil des Werkzeugs von der Ausgangsstellung in die Endstellung bewegt, und das zweite Teil so beschaffen ist, dass dieses den Sensor ausgelöst hat, wenn das zweite Teil sich in seiner Endstellung befindet.

Das zweite Teil des Werkzeugs kann ein Behälter sein. Das erste Teil des Werkzeugs kann eine Abdeckung für den Behälter sein. Als drittes Teil kann das Werkzeug den Gemüseschneider umfassen. Der Gemüseschneider kann zwischen der Abdeckung und dem Behälter angeordnet sein oder angeordnet werden, um den Gemüseschneider betreiben zu können. Durch den Spiralschneider geschnittenes Gemüse kann in den Behälter hineinfallen und so aufgefangen werden. Der Behälter kann außerdem dafür vorgesehen sein, durch den Spiralschneider geschnittenes Gemüse von einem Mischwerkzeug des Küchengeräts abzuschirmen, um so eine Beschädigung des geschnittenen Gemüses durch das Mischwerkzeug zu vermeiden.

Gemüseschneider und Behälter können so aufeinander abgestimmt sein, dass der Gemüseschneider durch den Behälter gehalten werden kann. Der Behälter kann sich beispielsweise zumindest an seiner Oberseite nach unten hin leicht verjüngen. Der Durchmesser des Gemüseschneiders kann so sein, dass der Gemüseschneider zwar in den Behälter eingesetzt werden kann, aber durch die Verjüngung schließlich bei der Oberseite des Behälters gehalten wird. Es kann sein, dass ein Rand des Gemüseschneiders auf den oberen Rand des Behälters aufgesetzt werden kann, um so den Gemüseschneider durch den Behälter halten zu können.

Der Gemüseschneider kann eine umlaufende Umrandung aufweisen, um den Gemüseschneider verbessert im Behälter bei der Oberseite halten zu können. Die umlaufende Umrandung kann beispielsweise an der Innenseite des Behälters anliegen und so die Lage des Gemüseschneiders stabilisieren zu können. Die umlaufende Umrandung kann beispielsweise von der Basis bzw. der Basisplatte nach oben und/oder nach unten hin abstehen. Die umlaufende Umrandung kann außerdem zum Schutz der Basis bzw. der Basisplatte vorgesehen sein. Die umlaufende Umrandung ist grundsätzlich eine Außenseite des Gemüseschneiders.

Ein Basisteil des Küchengeräts kann die Verriegelungseinrichtung umfassen, die den Deckel im verriegelten Zustand unlösbar mit dem Zubereitungsgefäß verbinden kann. Ist das Küchengerät so beschaffen, dass das Zubereitungsgefäß von dem Basisteil gelöst werden kann, so umfasst dann das Aufsetzen des Deckels bzw. das Aufsetzen des Werkzeugs auf das Zubereitungsgefäß, dass dann das Zubereitungsgefäß nicht von dem Basisteil gelöst ist. Das Zubereitungsgefäß ist dann beispielsweise in eine Aufnahme des Basisteils eingesetzt. Das Basisteil kann eine Steuerungseinrichtung, einen elektrischen Antrieb, einen Sensor, einen Schalter und/oder ein Display umfassen. Die Steuerungseinrichtung kann eine Recheneinheit wie zum Beispiel einen Prozessor oder einen Mikrokontroller umfassen. Die Steuerungseinrichtung kann einen elektronischen Speicher umfassen.

Der Sensor kann sich in einem ausgelösten und in einem nicht ausgelösten Zustand befinden und signalisieren, in welchem Zustand er sich befindet. Der Sensor kann also zwei verschiedene Zustände einnehmen. Das Signalisieren des Zustands kann durch ein elektrisches Signal erfolgen. Durch den Sensor überprüft das Küchengerät den verriegelten und entriegelten Zustand, weil der Sensor ausgelöst ist, wenn der aufgesetzte Deckel oder das aufgesetzte Werkzeug durch die Verriegelungseinrichtung verriegelt ist. Alternativ oder ergänzend kann das Küchengerät den verriegelten oder entriegelten Zustand anzeigen. Der Sensor ist nicht ausgelöst, wenn nur ein Teil des Werkzeugs auf das Zubereitungsgefäß aufgesetzt und verriegelt ist. Dieses Teil kann das erste Teil oder das zweite Teil sein. Der Sensor ist nicht ausgelöst, wenn kein aufgesetztes Werkzeug und auch kein aufgesetzter Deckel verriegelt ist. Ist ein Werkzeug oder ein Deckel lediglich auf das Zubereitungsgefäß aufgesetzt, aber nicht verriegelt, so ist der Sensor nicht ausgelöst. Durch das Verriegeln wird der Sensor also ausgelöst. Dieser befindet sich anschließend im ausgelösten Zustand. Durch das Entriegeln wird der Sensor in den nicht ausgelösten Zustand gebracht. Im Anschluss an das Entriegeln befindet sich der Sensor daher im nicht ausgelösten Zustand.

Da das Werkzeug mehrere Teile umfasst, ist es möglich, dass ein Benutzer versehentlich nur ein Teil des Werkzeugs auf das Zubereitungsgefäß aufsetzt. Es ist möglich, dass beispielsweise der Benutzer im Anschluss daran das Zubereitungsgefäß so betätigt, dass dadurch das aufgesetzte Teil verriegelt wird, so dass dieses dann nicht mehr von dem Zubereitungsgefäß gelöst werden kann. Weil der Sensor im Anschluss an die Verriegelung von nur einem Teil des Werkzeugs nicht ausgelöst ist, kann durch das Küchengerät eine Störung festgestellt werden. Das Vorliegen einer Störung kann dann dem Benutzer beispielsweise angezeigt werden. Der Benutzer hat so die Möglichkeit zeitnah festzustellen, dass zumindest ein Teil des Werkzeugs fehlt. Er kann im Anschluss daran den Fehler zeitnah beheben. Ein störungsfreier Betrieb kann dadurch verbessert sichergestellt werden. Es ist auch möglich, dass das Zubereitungsgefäß weitere Verarbeitungsschritte nicht erlaubt, bis die Störung behoben ist. Auch auf diese Weise können Probleme vermieden werden, die mit der Störung verbunden sein können.

In einer Ausgestaltung ist die Verriegelungseinrichtung so beschaffen, dass das Werkzeug im aufgesetzten Zustand durch das Verriegeln von einer Ausgangsstellung in eine Endstellung bewegt wird. Durch das Bewegen des Werkzeugs in die Endstellung wird der Sensor ausgelöst. In der Endstellung ist das Werkzeug verriegelt. Der Sensor ist folglich ausgelöst, wenn sich das Werkzeug in der Endstellung befindet.

Es ist beispielsweise möglich, dass das Werkzeug aufgesetzt wird und im Anschluss daran gedreht wird, um so die Endstellung und damit die verriegelte Stellung zu erreichen. Das Drehen des Werkzeugs kann beispielsweise manuell durch den Benutzer erfolgen. Das Drehen kann aber auch motorisiert durchgeführt werden.

Im aufgesetzten Zustand kann beispielsweise ein elastisch verformbarer Dichtring oder eine anders geformte elastische Dichtung des Werkzeugs auf dem Zubereitungsgefäß aufliegen. Beispielsweise durch die Verriegelungseinrichtung kann dann das Werkzeug weiter in Richtung des Zubereitungsgefäßes bewegt werden, weil der elastisch verformbare Dichtring bzw. die anders geformte elastische Dichtung zusammengepresst werden kann. Das Vorhandensein eines verformbaren Dichtrings oder einer anders geformten elastischen Dichtung ermöglicht es also, dass das aufgesetzte Werkzeug im Anschluss an das Aufsetzen von seiner dann vorliegenden Ausgangsstellung in seine Endstellung linear bewegt werden kann. Wird entriegelt, so bewirkt der elastisch verformbare Dichtring bzw. die anders geformte elastische Dichtung, dass das Werkzeug in seine Ausgangsstellung zurückbewegt wird. Das Bewegen kann wiederum manuell durch den Benutzer bewirkt werden. Es ist aber bei dieser Ausgestaltung auf besonders einfache Weise möglich, dass das Bewegen in Richtung Endstellung motorisiert durchgeführt wird.

Es ist möglich, dass das Werkzeug durch das Aufsetzen auf das Zubereitungsgefäß auch auf ein federndes Bauteil eines mechanischen Schalters aufgesetzt wird. Der mechanische Schalter kann so angeordnet sein, dass dadurch ein Spiel zwischen dem Werkzeug und dem Zubereitungsgefäß verbleibt, und zwar zumindest in der Nähe des mechanischen Schalters. Beispielsweise durch eine Kippbewegung kann das Werkzeug dann beispielsweise durch die Verriegelungseinrichtung weiter in Richtung Endstellung verschwenkt werden. Der mechanische Schalter und zwar sein federndes Bauteil wird dadurch betätigt und der Schalter dadurch ausgelöst. Die Bewegung in die Endstellung kann wiederum auf technisch einfache Weise motorisiert realisiert werden. Das Bewegen des Werkzeugs zurück in seine Ausgangsstellung kann durch die Federkraft des federnden Bauteils und/oder durch eine elastische Dichtung bewirkt werden.

Das Vorgesagte gilt in entsprechender Weise für den Deckel. Die Verriegelungseinrichtung ist dann also auch so beschaffen, dass der Deckel im aufgesetzten Zustand durch das Verriegeln von einer Ausgangsstellung in eine Endstellung bewegt wird. Durch das Bewegen des Deckels in die Endstellung wird der Sensor ausgelöst. In der Endstellung ist der Deckel verriegelt. Der Sensor ist folglich ausgelöst, wenn sich der Deckel in der Endstellung befindet.

In einer Ausgestaltung ist die Verriegelungseinrichtung so beschaffen, dass das erste Teil des Werkzeugs durch das Verriegeln von der Ausgangsstellung in die Endstellung bewegt wird. Das erste Teil ist so beschaffen, dass dieses durch das Verriegeln das zweite Teil des Werkzeugs von der Ausgangsstellung in die Endstellung bewegt. Das zweite Teil ist so beschaffen, dass dieses den Sensor ausgelöst hat, wenn das zweite Teil sich in seiner Endstellung befindet.

Das zweite Teil wird also nicht unmittelbar beispielsweise durch die Verriegelungseinrichtung motorisiert in die Endstellung bewegt. Dies geschieht stattdessen durch das erste Teil. Wäre das erste Teil also nicht vorhanden, dann könnte das zweite Teil nicht von einer Ausgangsstellung in die Endstellung im Rahmen einer Verriegelung bewegt werden. Umgekehrt kann es aber sein, dass das erste Teil beispielsweise motorisiert durch die Verriegelungseinrichtung in die Endstellung bewegt und verriegelt werden kann, ohne dass das zweite Teil vorhanden ist.

In einer Ausgestaltung ist das zweite Teil ein Behälter und das erste Teil ist eine Abdeckung für die Öffnung des Behälters. Die Abdeckung kann auf den Behälter aufgesetzt werden. Die Öffnung des Behälters ist dann zumindest teilweise verschlossen. Der Behälter ist so, dass dieser in das Zubereitungsgefäß eingesetzt werden kann. Der Behälter weist vorzugsweise an seiner Oberseite eine Verbreiterung auf, die auf dem Öffnungsrand des Zubereitungsgefäßes aufsetzen kann. Die Verbreiterung befindet sich damit immer außerhalb des Zubereitungsgefäßes. Die Verbreiterung ist also selbst dann grundsätzlich von außen sichtbar, wenn der übrige Teil des Behälters in das Zubereitungsgefäß eingesetzt ist. Die Verbreiterung ist auch dann grundsätzlich von außen sichtbar, wenn darüber hinaus die Abdeckung auf den Behälter aufgesetzt ist. Die Verbreiterung des Behälters kann kreisförmig oder teilkreisförmig sein.

Vorzugsweise weist der Behälter eine Halterung für die Abdeckung derart auf, dass die Abdeckung durch die Halterung gegen ein seitliches Verrutschen gesichert ist, wenn die Abdeckung auf den Behälter aufgesetzt ist.

In einer Ausgestaltung weist der Behälter an seiner Oberseite zumindest abschnittsweise einen seitlich abstehenden Rand auf. Der Rand steht dann flanschartig seitlich vom übrigen Teil des Behälters ab und verbreitert den Behälter bei seiner Oberseite. Diese Verbreiterung des Behälters kann eine Aufnahme für die Abdeckung umfassen. Die Abdeckung kann in die Aufnahme eingesetzt werden. Die Aufnahme der Verbreiterung kann so die Abdeckung gegen ein seitliches Verrutschen schützen. Die Aufnahme dient also als Halterung oder kann Teil der Halterung sein. Der flanschartig abstehende Rand kann die Öffnung des Behälters vollständig oder zumindest abschnittsweise umlaufen.

In einer Ausgestaltung kann der Sensor durch den flanschartig bzw. seitlich abstehenden Rand des Behälters ausgelöst werden. Beispielsweise kann der seitlich abstehende Rand des Behälters auf einem Taster oder Kipphebel eines elektrischen Schalters aufliegen, wenn der Behälter in das Zubereitungsgefäß eingesetzt worden ist. Der Behälter ist in das Zubereitungsgefäß dann so eingesetzt, dass zumindest ein beim elektrischen Schalter befindlicher Abschnitt des seitlich abstehenden Rands nach unten gedrückt werden kann und zwar gegen eine Federkraft des Tasters. Wird der seitlich abstehende Rand des Behälters nach unten gedrückt, so wird dadurch der Taster bzw. der Kipphebel bewegt und so der elektrische Schalter ausgelöst. Der elektrische Schalter ist also ein Sensor im Sinne der vorliegenden Erfindung. Die Bewegung des seitlich abstehenden Rands oder eines Abschnitts des seitlich abstehenden Rands von einer Ausgangsstellung in eine Endstellung kann aber auch zum Beispiel optisch oder beispielsweise mithilfe von Ultraschall detektiert werden.

In einer Ausgestaltung umfasst der Behälter an seiner Oberseite zumindest einen nach oben und/ oder seitlich abstehenden Griff. Steht der Griff seitlich ab, so kann der Griff als Verbreiterung genutzt werden, die verhindert, dass der Behälter vollständig in das Zubereitungsgefäß hineinrutschen kann. Steht der Griff nach oben ab, so kann dieser die Abdeckung gegen ein seitliches Verrutschen schützen und so zumindest Teil der Halterung für die Abdeckung sein. Steht der Griff sowohl seitlich als auch nach oben ab, so kann der Griff sowohl als Verbreiterung genutzt werden als auch als Halterung für die Abdeckung.

Der Behälter kann beispielsweise aus Kunststoff bestehen.

In einer Ausgestaltung umfasst das Werkzeug außer dem Spiralschneider ein anderes Zerkleinerungswerkzeug zum Zerkleinern von Speisen. Das Werkzeug kann wahlweise mit dem Gemüseschneide oder dem Zerkleinerungswerkzeug betrieben werden. Das Zerkleinerungswerkzeug ist relativ zu dem Behälter derart angeordnet oder kann relativ zu dem Behälter derart angeordnet werden, dass ein Lebensmittel oder eine Zutat einer Speise nach der Zerkleinerung mittels des Zerkleinerungswerkzeugs schwerkraftbedingt nach unten fällt, um im Behälter des Werkzeugs aufgefangen zu werden. Das Zerkleinerungswerkzeug kann drehbar sein, um durch das Drehen ein Lebensmittel oder eine Zutat einer Speise zu zerkleinern. Das Zerkleinerungswerkzeug kann beispielsweise eine drehbare Reibscheibe sein. Eine solche Reibscheibe kann nach oben abstehende Zähne umfassen. Außerdem kann die Reibscheibe Löcher umfassen, damit durch die Zähne zerkleinerte Zutaten einer Speise die Reibscheibe passieren und in den Behälter fallen können.

Das Zerkleinerungswerkzeug weist insbesondere mindestens eine Schneide zum Zerkleinern auf. Das Zerkleinerungswerkzeug kann eine Schneidscheibe sein. Es kann längliche, im Wesentlichen radial angeordnete Klingen zum Schneiden von Scheiben, beispielsweise von Kartoffeln, aufweisen. Es kann alternativ oder zusätzlich lokal begrenzte und mit einer Klinge versehene Vertiefungen bzw. Mulden, beispielsweise zum Zerkleinern von Gemüse, aufweisen. Dabei kann die Funktion abhängig von der Drehrichtung der Schneidscheibe sein. In einer Drehrichtung der Schneidscheibe werden beispielsweise Streifen geschnitten und in der entgegengesetzten Richtung Scheiben.

Das Zerkleinerungswerkzeug ermöglicht ein besonders kontrolliertes Zerkleinern von Zutaten für ein Lebensmittel, da Speisen oder Zutaten im Anschluss an eine Zerkleinerung in den Behälter fallen und nicht weiter zerkleinert werden können. Das Zerkleinerungswerkzeug zerkleinert ein Lebensmittel aber auf andere Weise als der Gemüseschneider. Das Zerkleinerungswerkzeug kann beispielsweise ein Lebensmittel in Streifen oder Scheiben schneiden. Das Zerkleinerungswerkzeug kann also keine Spiralen erzeugen.

Der Behälter kann eine mittig und/oder senkrecht verlaufende Öffnung aufweisen, durch welche eine Antriebswelle des Küchengeräts hindurch verlaufen kann, um das den Spiralschneider und ggfs. auch das Zerkleinerungswerkzeug anzutreiben. Das Küchengerät kann so ausgestaltet sein, dass im derart positionierten Zustand des Behälters eine Welle durch das Zubereitungsgefäß hindurch verläuft, um mittels einem unterhalb des Zubereitungsgefäßes befindlichen Motors den Spiralschneider und ggfs. auch das Zerkleinerungswerkzeug anzutreiben. Die Welle kann mehrteilig sein und Kupplungselemente umfassen, um die verschiedenen Abschnitte der Welle miteinander zu verbinden.

So kann in einer vorteilhaften Ausgestaltung ein Abschnitt der Welle ein Mischwerkzeug des Küchengeräts mit der Welle des Gemüseschneiders und ggfs. auch mit dem Zerkleinerungswerkzeug drehfest verbinden. Ein Drehen des Mischwerkzeugs hat dann zur Folge, dass das optional vorgesehene Zerkleinerungswerkzeug mit gleicher Drehzahl gedreht wird. Dieser Abschnitt der Welle kann insbesondere von dem Mischwerkzeug des Küchengeräts gelöst werden, um das Küchengerät mit dem darin befindlichen Mischwerkzeug unabhängig vom Zerkleinerungswerkzeug mit dem zugehörigen Abschnitt der Welle und unabhängig vom Behälter nutzen zu können. Das Zerkleinerungswerkzeug kann fest mit dem Abschnitt der Welle verbunden sein. Es ist aber auch möglich, dass das Zerkleinerungswerkzeug lösbar mit dem genannten Abschnitt der Welle verbunden ist, um eine Aufbewahrung und eine Reinigung zu erleichtern. Diese Ausgestaltung ist zu bevorzugen, damit der Abschnitt der Welle auch für das Betreiben des Spiralschneiders genutzt werden kann.

In einer weiteren Ausgestaltung ist das Zerkleinerungswerkzeug drehbar in einem Gehäuseteil des Behälters angeordnet oder kann drehbar im Behälter angeordnet werden.

Der Spiralschneider sowie das Zerkleinerungswerkzeug können so angeordnet oder anordbar sein, dass durch eine Öffnung in der Abdeckung eingeführte Lebensmittel nach Passage des Spiralschneiders bzw. des Zerkleinerungswerkzeugs in dem Behälter aufgefangen werden. Entsprechendes gilt auch hier wie an anderer Stelle der Beschreibung für Zutaten zu einer Speise wie Gewürze. Die Öffnung weist insbesondere die Form eines Stutzens auf. Sie kann durch einen Stößel verschließbar sein, der zum Hineindrücken von Lebensmitteln ausgestaltet sein kann.

In einer Ausgestaltung befindet sich das Werkzeug zwischen zwei Verriegelungselementen der Verriegelungseinrichtung, wenn das Werkzeug auf das Zubereitungsgefäß aufgesetzt ist. Entsprechendes gilt für den aufgesetzten Deckel. Das Werkzeug sowie der Deckel können dadurch besonders zuverlässig verriegelt werden.

In einer Ausgestaltung ist ein Verriegelungselement der Verriegelungseinrichtung ein um seine Längsachse drehbarer Arm, der von einer Öffnungsstellung in eine Verriegelungsstellung und zurückgedreht werden kann. Der drehbare Arm kann vorzugsweise durch einen elektrischen Antrieb des Küchengeräts gedreht werden. Der Arm kann einen teilkreisförmigen Querschnitt aufweisen. Bevorzugt gibt es zwei solcher Arme. Das Werkzeug befindet sich dann zwischen den beiden Armen, wenn das Werkzeug auf das Zubereitungsgefäß aufgesetzt ist. Entsprechendes gilt für den Deckel.

Der Sensor kann beispielsweise ein optischer Sensor sein, der also auf optische Weise feststellen kann, ob ein Werkzeug oder ein Deckel verriegelt sind. Der Sensor kann beispielsweise eine Lichtschranke umfassen. Durch das Verriegeln wird die Lichtschranke beispielsweise unterbrochen. Ist die Lichtschranke unterbrochen, so befindet sich der Sensor im ausgelösten Zustand. Der Sensor kann beispielsweise ein induktiver Sensor sein. Durch das Verriegeln kann dann ein induktives Signal ausgelöst werden. Im Anschluss daran befindet sich der Sensor im ausgelösten Zustand. Der Sensor kann ein Drucksensor sein. Durch das Verriegeln kann beispielsweise ein Druck auf den Sensor ausgeübt werden. Der Sensor befindet sich dann im ausgelösten Zustand. In einer bevorzugten Ausgestaltung ist der Sensor ein elektrischer Schalter mit einem Taster oder einem Kipphebel, auf dem das Werkzeug aufliegt, wenn das Werkzeug auf das Zubereitungsgefäß aufgesetzt ist.

Das Küchengerät kann ein drehbares Mischwerkzeug zum Mischen und/oder Zerkleinern einer Speise in einem Bodenbereich des Zubereitungsgefäßes umfassen. Durch das Mischwerkzeug können besonders schnell und einfach ein oder mehrere Zutaten einer Speise gemischt und/oder zerkleinert werden. Im Vergleich zum Zerkleinerungswerkzeug kann allerdings weniger kontrolliert zerkleinert werden.

Um besonders schnell und einfach zerkleinern zu können, hat sich bewährt, dass das Mischwerkzeug mit wenigsten 2000 oder 3000 Umdrehungen pro Minute, vorzugsweise 5000 Umdrehungen pro Minute gedreht werden kann. Es können aber auch geringere Drehgeschwindigkeiten genügen, um ein Lebensmittel oder eine Zutat einer Speise schnell und einfach zu zerkleinern. Besonders bevorzugt kann mit wenigstens 8000 Umdrehungen/min gedreht werden. Geringe Drehgeschwindigkeiten können dazu genutzt werden, um ein Lebensmittel oder Zutaten einer Speise lediglich zu vermischen, ohne die Speise bzw. Zutaten einer Speise zu zerkleinern.

Der Deckel für das Zubereitungsgefäß kann zweiteilig sein. Ein erstes Deckelteil eines zweiteiligen Deckels kann eine vergleichsweise kleine Öffnung umfassen, die mit dem zweiten Teil des Deckels verschlossen werden kann. Der zweite Teil des Deckels kann insbesondere manuell entfernt werden und zwar völlig unabhängig von einem verriegelten Zustand. Es steht dann eine kleine Öffnung bereit, durch die hindurch ein Lebensmittel oder Zutaten einer Speise in das Zubereitungsgefäß auch dann eingefüllt werden können, wenn der erste Teil des Deckels fest mit dem Zubereitungsgefäß durch die Verriegelungseinrichtung verbunden ist. Der zweite Teil des Deckels kann eine Gefäßform umfassen, der dann beispielsweise als Messbecher dienen kann, um Zutaten dosieren zu können. Der Deckel ist vollständig geschlossen, sodass das Zubereitungsgefäß dann von außen unzugänglich ist. Ein Deckel im Sinne der vorliegenden Erfindung ist zumindest überwiegend geschlossen.

Das Küchengerät umfasst vorzugsweise eine Steuerungseinheit, mit der die Drehzahl für das Mischwerkzeug eingestellt werden kann. Durch die Steuerungseinheit kann für das Mischwerkzeug grundsätzlich eine Drehzahl von wenigstens 5000 Umdrehungen pro Minute, vorzugsweise von wenigstens 8000 Umdrehungen pro Minute, eingestellt werden. Das Mischwerkzeug kann also dann mit wenigstens 5000 Umdrehungen pro Minute, vorzugsweise mit wenigstens 8000 Umdrehungen pro Minute, rotieren. Besonders bevorzugt sind 10.000 Umdrehungen pro Minute und mehr möglich. Durch die genannten Drehzahlen wird erreicht, dass Lebensmittel und/oder weitere Zutaten einer Speise, die sich unmittelbar in dem Zubereitungsgefäß befinden, schnell und zuverlässig zerkleinert werden können. Derart hohe Drehzahlen sind zwar nicht zwingend erforderlich, um Lebensmittel sowie weitere Zutaten zerkleinern zu können. Derart hohe Drehzahlen erleichtern jedoch ein gewünschtes Zerkleinern. Die Steuerungseinheit muss daher nicht zwingend in der Lage sein, eine Drehzahl von wenigstens 5000 Umdrehungen pro Minute oder wenigstens 8000 Umdrehungen pro Minute einstellen zu können.

Das Küchengerät und zwar grundsätzlich ein Basisteil des Küchengeräts können eine Eingabeeinrichtung umfassen wie zum Beispiel einen Schieberegler, einen Drehknopf und/oder ein berührungsempfindliches Display. Über die Eingabeeinrichtung kann eine gewünschte Drehzahl manuell eingestellt werden. Mithilfe der Eingabeeinrichtung kann beispielsweise eingestellt werden, dass das Mischwerkzeug mit 5000 Umdrehungen pro Minute dreht. Die Steuerungseinheit steuert im Anschluss an eine entsprechende Eingabe dann die Drehzahl so, dass das Mischwerkzeug mit 5000 Umdrehungen pro Minute rotiert. Durch die Eingabeeinrichtung können auch andere Drehzahlen ausgewählt werden, die beispielsweise weniger als 5000 Umdrehungen pro Minute betragen oder mehr. Die Eingabeeinrichtung kann so beschaffen sein, dass Drehzahlen stufenlos verändert werden können. Die Eingabeeinrichtung kann so beschaffen sein, dass verschiedene Stufen und dadurch verschiedene Drehzahlen eingestellt werden können. Die Eingabeeinrichtung kann so beschaffen sein, dass wenigstens fünf verschiedene Stufen für Drehgeschwindigkeiten vorhanden sind.

Die Steuerungseinheit kann so beschaffen sein, dass die Drehgeschwindigkeit für das Mischwerkzeug auf unter 25000 Umdrehungen pro Minute begrenzt ist, um mechanische Überlastungen zu vermeiden.

Die Steuerungseinheit kann so eingerichtet sein, dass beispielsweise über ein berührungsempfindliches Display, einen Drehknopf oder über eine andere Schnittstelle ein Modus für das Herstellen von Zoodles ausgewählt werden kann. Die Steuerungseinheit kann so eingerichtet sein, dass bei Auswahl des Modus der Spiralschneide mit weniger als 800 Umdrehungen pro Minute oder mit weniger als 600 Umdrehungen pro Minute gedreht wird. Die Steuerungseinheit kann so eingerichtet sein, dass bei Auswahl des Modus der Spiralschneide mit mehr als 300 Umdrehungen pro Minute oder mit mehr als 400 Umdrehungen pro Minute gedreht wird. Es lassen sich bei diesen Drehgeschwindigkeiten sehr gute Ergebnisse erzielen, wie Versuche gezeigt haben. Die Steuerungseinheit kann so eingerichtet sein, dass bei Auswahl des Modus das Mischwerkzeug mit weniger als 1500 Umdrehungen pro Minute oder mit weniger als 1300 Umdrehungen pro Minute gedreht wird. Die Steuerungseinheit kann so eingerichtet sein, dass bei Auswahl des Modus das Mischwerkzeug mit mehr als 700 Umdrehungen pro Minute oder mit mehr als 900 Umdrehungen pro Minute gedreht wird. Das Übersetzungsverhältnis des Getriebes kann so sein, dass ein Drehen des Mischwerkzeugs mit den genannten Drehgeschwindigkeiten zu den genannten Drehgeschwindigkeiten des Spiralschneiders führen. Beispielweise kann das Übersetzungsverhältnis des Getriebes bei 1:2,158 liegen, was beispielsweise mit einem Zahnradgetriebe erreicht werden kann, bei der ein Zahnrad 19 Zähne aufweist und das andere Zahnrad 41 Zähne. Das Mischwerkzeug kann dann beispielsweise mit 1100 Umdrehungen pro Minute drehen. Der Spiralschneider kann dann mit etwas mehr als 500 Umdrehungen pro Minute für ein Herstellen von Zoodles drehen.

Die Steuerungseinheit kann so beschaffen sein, dass diese eine Drehzahl für das Mischwerkzeug automatisiert einstellen kann, so zum Beispiel in Abhängigkeit von einem digital gespeicherten Rezept oder in Abhängigkeit von ein oder mehreren Messwerten, die mithilfe von ein oder mehreren Sensoren ermittelt werden. Die ein oder mehreren Sensoren können Teil des Küchengeräts sein, so zum Beispiel Teil des Basisteils und/oder des Zubereitungsgefäßes. Es kann sich aber auch um einen externen Sensor handeln wie zum Beispiel ein Thermometer, das drahtlos Daten mit dem Küchengerät austauschen kann und zwar insbesondere mit dem Basisteil.

Ein Mischwerkzeug kann zumindest eine von einer Welle abstehende Klinge umfassen. Die Klinge umfasst zumindest eine Schneidkante, durch die Lebensmittel besonders gut zerkleinert werden können. Der Querschnitt einer Schneidkante läuft spitz zu. An einer der Schneidkante gegenüberliegenden Seite kann die Klinge eine stumpfe Kante aufweisen. Im Vergleich zur Schneidkante können mit der stumpfen Kante Lebensmittel nicht oder zumindest deutlich schlechter zerkleinert werden. Insbesondere bei dieser Ausgestaltung der Erfindung kann die Drehrichtung des Mischwerkzeugs ausgewählt werden, um wahlweise Zerkleinern oder nur Mischen zu können.

Das Mischwerkzeug kann eine Mehrzahl von solchen Klingen umfassen. Es können beispielsweise zwei, drei oder vier Klingen vorhanden sein, die beispielsweise radial gleichmäßig verteilt von der Welle abstehen können. In axialer Richtung können Klingen zumindest abschnittsweise in unterschiedlichen Höhen angeordnet sein, um Speise in dem Zubereitungsgefäß oder Lebensmittel in unterschiedlichen Höhen erfassen zu können. Grundsätzlich sind sämtliche Klingen nahe beim Grund des Zubereitungsgefäßes angeordnet. Die Klingen befinden sich daher beispielsweise nur im unteren Drittel des Zubereitungsgefäßes. Die ein oder mehreren Klingen des Mischwerkzeugs sind also vorzugsweise in der Nähe des Bodens des Zubereitungsgefäßes angeordnet, um Lebensmittel bodennah erfassen zu können.

Die Welle des Mischwerkzeugs kann durch einen Elektromotor des Zubereitungsgefäßes angetrieben werden. Die Steuerungseinheit kann dann die Drehzahl des Elektromotors und damit die Drehzahl des Mischwerkzeugs steuern. Bevorzugt kann die Steuerungseinheit auch die Drehrichtung des Mischwerkzeugs steuern.

Die Welle des Mischwerkzeugs kann durch den Boden des Zubereitungsgefäßes hindurchführen, damit die Welle ein Einfüllen einer Speise in das Zubereitungsgefäß nicht behindert. Die Welle des Mischwerkzeugs kann aber auch von oben in das Zubereitungsgefäß hineinreichen.

Das Mischwerkzeug kann mit dem Zubereitungsgefäß fest verbunden sein. Dies schließt nicht aus, dass das Mischwerkzeug vom Boden des Zubereitungsgefäßes auch ohne Werkzeug demontiert werden kann, um vor allem das Mischwerkzeug leicht und gründlich von allen Seiten reinigen zu können.

Das Zubereitungsgefäß ist flüssigkeitsdicht. Es kann also eine Flüssigkeit in das Zubereitungsgefäß hineingefüllt werden, ohne dass die Flüssigkeit aus dem Zubereitungsgefäß herausfließen kann.

Die Welle des Mischwerkzeugs kann unterhalb des Bodens des Zubereitungsgefäßes ein Kupplungselement umfassen, das mit einem Kupplungselement einer Welle eines Elektromotors gekuppelt werden kann. Im gekuppelten Zustand kann dann eine Drehbewegung des Elektromotors auf das Mischwerkzeug übertragen werden. Durch Vorsehen von solchen Kupplungselementen kann erreicht werden, dass das Zubereitungsgefäß von dem übrigen Teil des Zubereitungsgefäßes gelöst werden kann. Die beiden Kupplungselemente verbinden also die beiden Wellen drehfest miteinander und zwar grundsätzlich in beide Drehrichtungen. Es ist nicht erforderlich, dass die beiden Kupplungselemente die beiden Wellen in axialer Richtung miteinander verbinden. Ganz im Gegenteil ist dies sogar nachteilhaft, weil dann ein Abnehmen des Zubereitungsgefäßes behindert wird.

Befindet sich eine Zutat einer Speise in einem Behälter des Werkzeugs, dann befindet sich die Zutat nicht unmittelbar im Zubereitungsgefäß. Eine Zutat, die sich in dem Behälter befindet, kann durch das Mischwerkzeug weder gemischt noch zerkleinert werden.

Ein Behälter des Werkzeugs kann flüssigkeitsdicht sein wie das Zubereitungsgefäß. Ein Behälter kann aber zum Beispiel siebförmig sein. Die Funktion des Behälters kann sein, zerkleinerte Lebensmittel daran zu hindern, durch das Mischwerkzeug weiter zerkleinert zu werden. Dies kann durch siebförmige Wände des Behälters erreicht werden. Daher müssen die Wände und/oder der Boden des Behälters nicht zwingend flüssigkeitsdicht sein. Ein flüssigkeitsdichter Behälter ist aber besonders zu bevorzugen, da dieser besonders zuverlässig verhindert, dass zerkleinerte Speise oder Zutaten, die zerkleinert worden sind, unplanmäßig in das Zubereitungsgefäß gelangen.

Die Erfindung betrifft außerdem ein Werkzeug für ein Einsetzen in ein Zubereitungsgefäß eines erfindungsgemäßen Küchengeräts, welches einen Behälter und eine Abdeckung für den Behälter umfasst, wobei zumindest eine Stufe in eine Öffnung eines Griffs des Behälters eingesetzt ist, wenn die Abdeckung den Behälter abdeckt, und der Behälter einen seitlich abstehenden oberen Rand umfasst.

Das Werkzeug kann einen Spiralschneider und optional ein anderes Zerkleinerungswerkzeug umfassen. Das Werkzeug kann außerdem wie zuvor beschrieben beschaffen sein.

Die Erfindung betrifft außerdem ein Verfahren zum Zerkleinern von Lebensmitteln unter Nutzung eines erfindungsgemäßen Küchengeräts, wobei das Werkzeug auf das Zubereitungsgefäß des Küchengeräts aufgesetzt und nach dem Aufsetzen verriegelt wird, wobei durch das Verriegeln der Sensor durch ein Teil des Werkzeugs ausgelöst wird.

Die Erfindung betrifft außerdem einen Gemüseschneider für ein Küchengerät. Der Gemüseschneider kann wie beschrieben beschaffen sein. Der Gemüseschneider kann beispielsweise eine ebene Basisplatte aufweisen, die am Außenumfang kreisrund sein kann. Auf der Basisplatte können beispielsweise zwei zylinderförmige Erhebungen und/oder ein Griff angebracht sein. Eine Welle des Gemüseschneiders kann durch die eine zylinderförmige Erhebungen hindurchgeführt oder hindurchführbar sein. Ein Spiralschneider des Gemüseschneiders kann auf die andere zylinderförmige Erhebung drehbar aufgesetzt sein. Der Spiralschneider kann über ein Getriebe des Gemüseschneiders so angetrieben werden, dass sich der Spiralschneider langsamer als die Welle drehen wird. Der Außendurchmesser des Gemüseschneiders kann nicht größer als 20 cm oder nicht größer als 17 cm sein, um Zucchinis durch den Spiralschneider mit geringem Platzaufwand schneiden zu können. Ein übermäßig großer Bauraum wird also durch die Auswahl dieser Obergrenze vermieden.

Die Erfindung betrifft außerdem ein Werkzeug mit dem beschriebenen Gemüseschneider, mit der beschriebenen Abdeckung und dem beschriebenen Behälter. Das Werkzeug kann außerdem die beschrieben Schneidscheibe umfassen, wobei das Werkzeug dann wahlweise mit dem Gemüseschneider oder mit der Schneidscheibe betrieben werden kann. Das Werkzeug kann wie beschrieben betrieben werden. Nachfolgend wird die Erfindung auch anhand von Figuren näher erläutert. Nachfolgend genannte Merkmale können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: Presswerkzeug mit Stößeln eines Werkzeugs;
- Figur 2:: Abdeckung des Werkzeugs;
- Figur 3:: Schneidscheibe des Werkzeugs;
- Figur 4:: Behälter des Werkzeugs;
- Figur 5:: Welle des Werkzeugs;
- Figur 6:: Küchenmaschine mit Deckelteil;
- Figur 7:: Küchenmaschine mit Innenansicht in das Zubereitungsgefäß;
- Figur 8:: Küchenmaschine mit Werkzeug;
- Figur 9:: Gemüseschneider;
- Figur 10:: Schnittdarstellung eine ausschnittsweise gezeigte Küchenmaschine mit Spiralschneider;
- Figur 11:: Oberseite von Spiralschneider;
- Figur 12: Unterseite von Spiralschneider aus Figur 11;
- Figur 13:: Presswerkzeug mit Halterung;
- Figur 14:: Presswerkzeug aus Figur 13 mit Kappe;
- Figur 15:: Aufnahmeeinrichtung mit Schublade und Gemüseschneider
- Figur 16:: Unterseite der Aufnahmeeinrichtung aus Figur 15;
- Figur 17:: Schublade mit eingesetztem Gemüseschneider;
- Figur 18:: Aufnahmeeinrichtung;
- Figur 19:: Adapter
- Figur 20:: Presskegel.

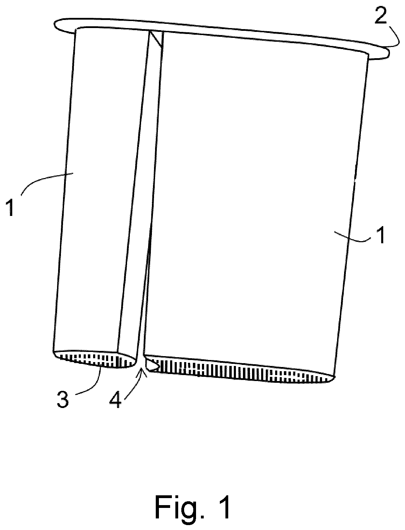

Die Figuren 1 bis 5 zeigen eine schematische Darstellung der insgesamt fünf Teile eines Werkzeugs. Das Werkzeug ist ein Werkzeug für ein Küchengerät wie zum Beispiel eine Küchenmaschine. Eine Küchenmaschine ist ein Küchengerät, das wenigstens ein abnehmbares Zubereitungsgefäß und ein Mischwerkzeug umfasst, durch das im Zubereitungsgefäß befindliche Lebensmittel zumindest gemischt werden können.

Die Figur 1 zeigt ein Presswerkzeug mit zwei Stößeln 1. Die beiden Stößel 1 sind an ihrer Oberseite durch einen umlaufenden Rand 2 fest miteinander verbunden. Der Rand 2 steht seitlich ab. Ein jeder Stößel 1 kann zugleich als Gefäß ausgebildet sein, so zum Beispiel als Messbecher. An der Unterseite können beide Stößel 1 vorstehende Noppen 3 aufweisen, die ein Lebensmittel fixieren sollen. Zwischen den beiden Stößeln 1 kann wie in der Figur 1 gezeigt ein Spalt 4 vorhanden sein. Die beiden Stößel 1 sind grundsätzlich gleich lang.

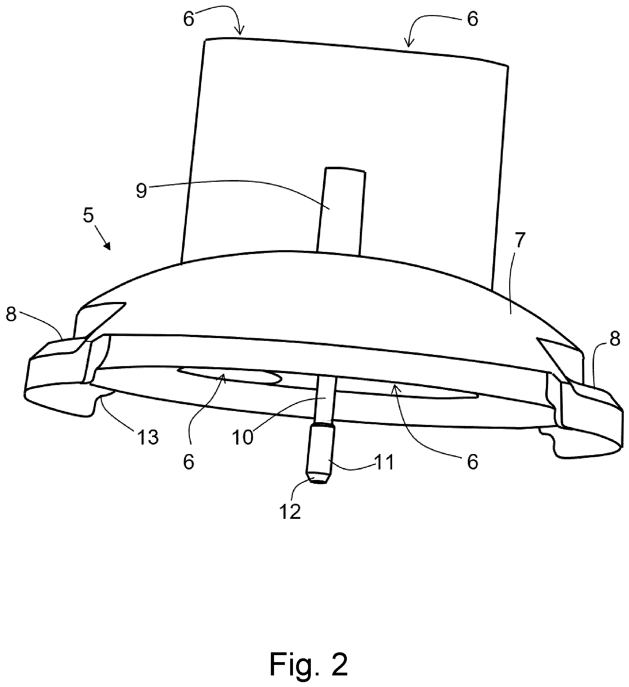

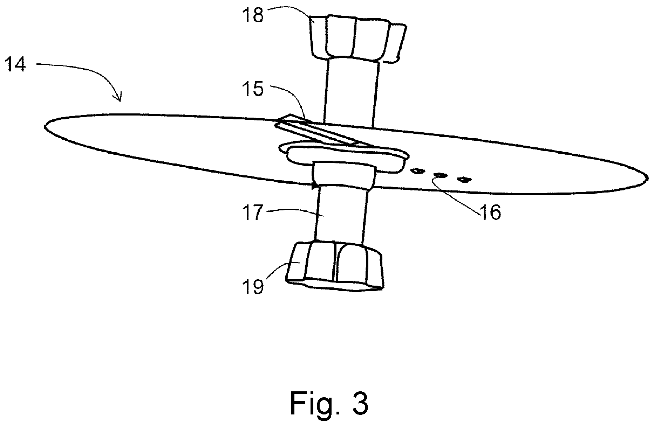

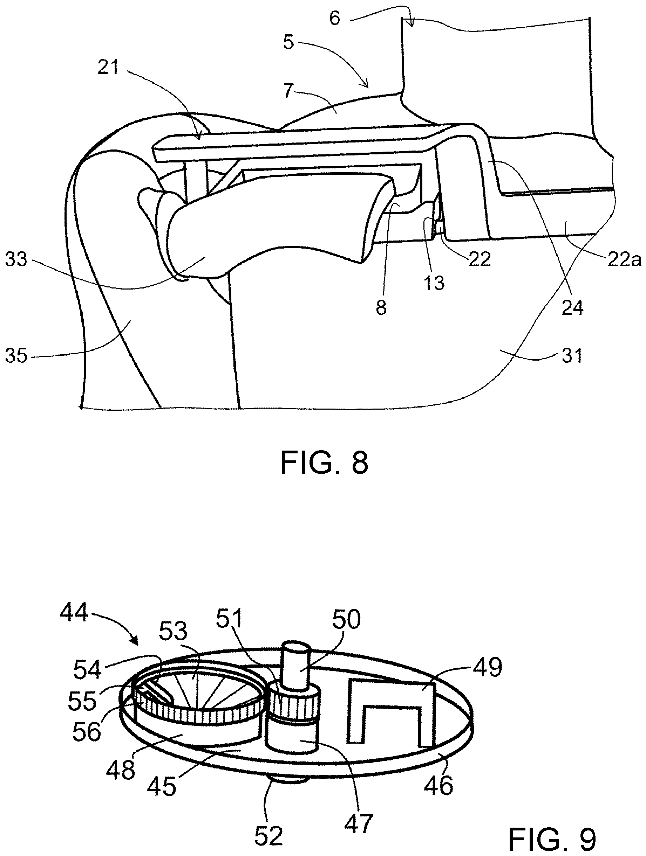

In der Figur 2 wird eine Abdeckung 5 des Werkzeugs gezeigt. Die Abdeckung 5 umfasst zwei Schächte 6, die durch einen nach oben abstehenden Stutzen mit einer inneren Trennwand gebildet werden. Die Schächte 6 sind so an die beiden Stößel 1 angepasst, dass die Stößel 1 in die beiden Schächte 6 hineingesteckt werden können. Durch den seitlich abstehenden Rand 2 wird verhindert, dass die Stößel 1 durch die Schächte 6 hindurchfallen können. Mithilfe der Stößel 1 kann ein Lebensmittel durch die Schächte 6 hindurch gegen ein in der Figur 3 gezeigtes Zerkleinerungswerkzeug 14 oder gegen einen in der Figur 9 gezeigten Spiralschneider gepresst werden.

Die Schächte 6 bzw. der Stutzen sind an ihrer Unterseite mit einer gewölbten Kappe 7 verbunden und zwar in einem randseitigen Bereich der Kappe 7. An der Unterseite der Kappe 7 sind an zwei gegenüberliegenden Seiten teilkreisförmige Stufen 8 vorhanden. Die beiden teilkreisförmigen Stufen 8 stehen seitlich sowie nach unten von der Kappe 7 ab.

Ein Dorn 9 steht nach oben von der Kappe 7 ab und zwar in etwa von der Mitte der Kappe 7. Durch den Dorn 9 wird eine nach unten gegenüber der Kappe 7 vorstehender Stab 10 gehalten. Der Außendurchmesser des Dorns 9 ist aus Stabilitätsgründen größer als der maximale Außendurchmesser des Stabs 10. Der Stab 10 kann an seinem freien Ende eine zylinderförmige Verdickung 11 mit einem sich verjüngenden freien Ende 12 aufweisen. Die Unterseite der Stufen 8 kann als Hakenform 13 ausgebildet sein.

In der Figur 3 wird ein Zerkleinerungswerkzeug, und zwar eine Schneidscheibe 14 mit einem Messer bzw. einer Klinge 15 und weiteren Schneidmitteln 16 gezeigt. Durch das Messer 15 und die weiteren Schneidmittel 16 kann ein Lebensmittel durch Drehen der Schneidscheibe 14 um ihre Welle 17 zerkleinert werden. Durch das Zerkleinern passiert ein zerkleinertes Lebensmittel die Schneidscheibe 14. Die Welle 17 ist schaftförmig, zumindest teilweise hohl und weist an ihren Enden kranzförmige Kupplungselemente 18 und 19 auf. Der Stab 10 kann durch das obere Kupplungselement 18 hindurch in den Schaft der Welle 17 hineingesteckt werden. Dies stabilisiert die Lage der Welle 17 während des Betriebs im zusammengesetzten Zustand des Werkzeugs.

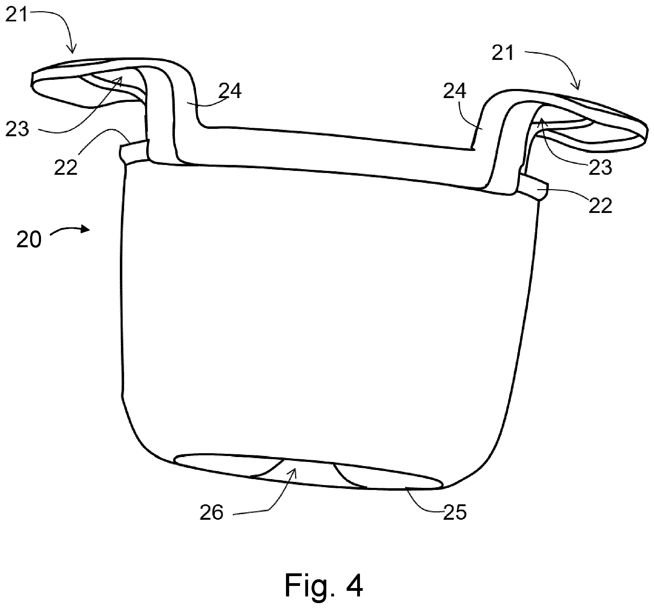

Die Figur 4 zeigt einen Behälter 20 des Werkzeugs. An der Oberseite des Behälters 20 gibt es zwei gegenüberliegende Griffe 21. Die beiden Griffe 21 erstrecken sich von oberen Randabschnitten 22 des Behälters 20 zunächst nach oben und dann nach außen zur Seite. Ein jeder Griff 21 bildet so eine Öffnung 23. In die Öffnungen 23 können die Stufen 8 eingesetzt werden. Die Unterseiten der Stufen 8 sitzen dann auf den Randabschnitten 22 auf. Die nach oben weisenden Stege 24 der Griffe 21 verhindern dann ein seitliches Verrutschen der Abdeckung 5 mit der Kappe 7 und tragen zu einer Positionierung der Abdeckung 5 bei. Die Hakenformen 13 der Unterseiten können dann die Randabschnitte 22 umgreifen und so ergänzend dazu beitragen, dass die Abdeckung 5 relativ zum Behälter 20 positioniert wird und ein seitliches Verrutschen verhindert wird (siehe auch Figur 8).

Der Boden 25 des Behälters 20 weist eine trichterförmige Öffnung 26 auf, die in einen hohlen Schaft einmündet.

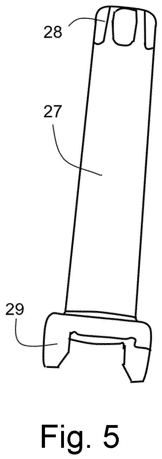

In der Figur 5 wird eine Welle 27 gezeigt, die durch die trichterförmige Öffnung 26 und den sich daran anschließenden hohlen Schaft hindurchgesteckt werden kann. Das obere Ende der Welle 27 weist ein Kupplungselement 28 auf, das in das untere Kupplungselement 19 der Schneidscheibe 13 eingesetzt werden kann. Die äußere Kontur des Kupplungselements 28 korrespondiert mit der inneren Kontur des Kupplungselements 19. Dadurch wird erreicht, dass die beiden Kupplungselemente drehfest miteinander verbunden sind, wenn das Kupplungselement 28 in das Kupplungselement 19 eingesetzt ist. Dies kann in gleicher Weise für das Kupplungselement 52 des in der Figur 9 gezeigten Gemüseschneiders 44 gelten.

Die Welle 27 weist ein unteres Kupplungselement 29 auf. Das untere Kupplungselement 29 kann so auf ein Mischwerkzeug im Inneren eines Zubereitungsgefäßes einer Küchenmaschine aufgesetzt werden, dass das Kupplungselement 29 drehfest mit dem Mischwerkzeug verbunden ist. Ein Drehen des Mischwerkzeugs hat dann zur Folge, dass auch der Spiralschneider bzw. alternativ die Schneidscheibe 13 gedreht wird, wenn die Welle 27 drehfest mit der in der Figur 9 gezeigten Welle 50 des Gemüseschneiders 44 oder mit der Schneidscheibe 13 verbunden ist.

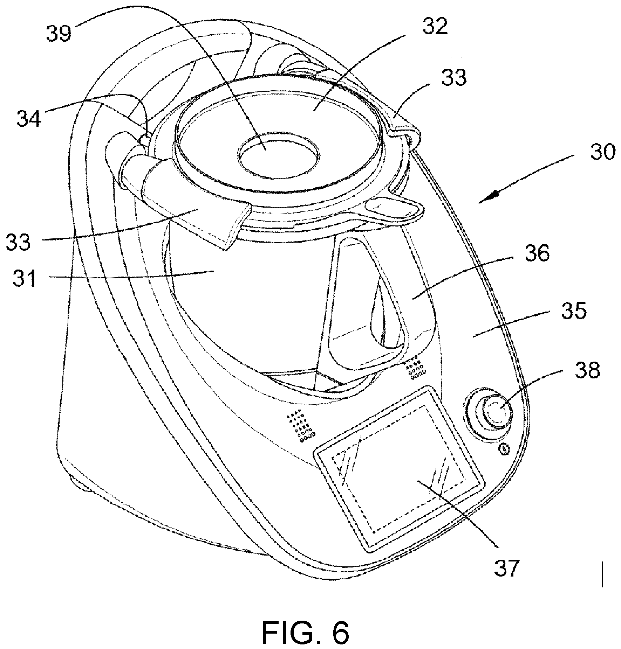

Die Figur 6 zeigt eine solche Küchenmaschine 30 mit einem Zubereitungsgefäß 31. Das Zubereitungsgefäß 31 kann vollständig oder überwiegend aus Metall bestehen. Im Zubereitungsgefäß 31 kann eine elektrische Heizung integriert sein. Auf dem Zubereitungsgefäß 31 ist ein Deckelteil 32 aufgesetzt. Das Deckelteil 32 für das Zubereitungsgefäß 31 ist durch armartige Verriegelungselemente, also Arme 33, verriegelt. Das Deckelteil 32 befindet sich zwischen den beiden Armen 33. Die Arme 33 können um ihre Längsachse motorisiert gedreht werden und so hin und her zwischen einer Öffnungsstellung und einer Verriegelungsstellung. Das Deckelteil 32 hat einen Sensor und zwar einen Kipphebel 34 eines elektrischen Schalters heruntergedrückt und so ausgelöst. Die armartigen Verriegelungselemente 33 und der Kipphebel 34 sind an einem Basisteil 35 der Küchenmaschine 30 angebracht. Das Zubereitungsgefäß 31 ist in das Basisteil 35 eingesetzt und kann aus dem Basisteil 35 herausgenommen werden. Um das Zubereitungsgefäß 31 herausnehmen zu können, umfasst dieses einen Griff 36.

Das Basisteil 35 umfasst zur Bedienung ein Display 37 und einen Drehschalter 38. Das Deckelteil 32 umfasst mittig eine Öffnung 39, die mit einem gefäßartigen Verschluss verschlossen werden kann. Durch den ausgelösten Kipphebel 34 hat die Steuerungseinheit der Küchenmaschine 30 die Information erhalten, dass das Deckelteil ordnungsgemäß aufgesetzt und verriegelt ist. Eine Information über den Zustand des nicht gezeigten gefäßartigen Verschlusses hat die Steuerungseinheit der Küchenmaschine 30 allerdings nicht erhalten können.

Werden die armartigen Verriegelungselemente 33 in ihre Öffnungsstellung gedreht, so wird dadurch der Kipphebel 34 durch Federkraft nach oben in seine nicht ausgelöste Stellung bewegt. Diese Bewegung des Kipphebels 34 hebt das Deckelteil 32 entsprechend an. Das Deckelteil 32 ist dann zwar auf dem Kipphebel 34 aufgesetzt, aber nicht verriegelt.

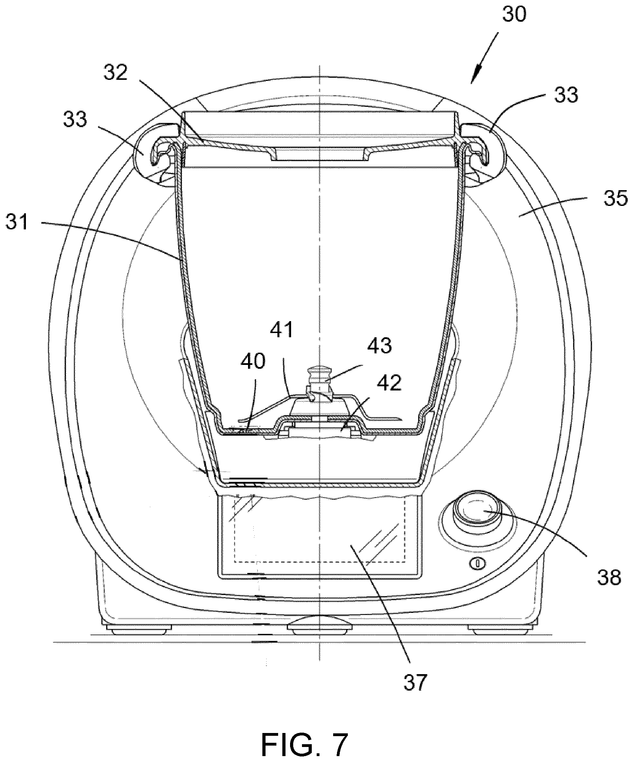

Die Figur 7 zeigt die Küchenmaschine 30 aus der Figur 6. Der Bereich des Zubereitungsgefäßes 31 ist aufgeschnitten gezeigt, sodass das Innenleben sichtbar ist. Am Grund 40 des Zubereitungsgefäßes 31 befindet sich ein drehbares Mischwerkzeug 41. Das Mischwerkzeug 41 wird durch einen Welle 43 angetrieben, die durch den Grund 40 des Zubereitungsgefäßes 31 hindurchgeführt ist. Die Welle 43 ist mit einem unteren Kupplungselement in ein Kupplungselement 42 des Basisteils 35 eingesetzt und dadurch drehfest verbunden. Das Kupplungselement 42 ist mit der Welle eines elektrischen Motors verbunden, der sich im Basisteil 35 befindet. Über den elektrischen Motor im Basisteil 35 kann das Mischwerkzeug 41 gedreht werden.

Wird das in der Figur 7 links oben gezeigte Verriegelungselement 33 entgegengesetzt zum Uhrzeigersinn gedreht und das rechts oben gezeigte Verriegelungselement 33 im Uhrzeigersinn, so wird die Verriegelung gelöst und das Deckelteil 32 kann vom Zubereitungsgefäß 31 abgenommen werden.

Das in der Figur 5 gezeigte Kupplungselement 29 kann auf die Welle 43 so aufgesetzt werden, dass eine drehfeste Verbindung zwischen dem Mischwerkzeug 41 und dem Kupplungselement 29 hergestellt wird.

Anstelle des Deckelteils 32 kann das Werkzeug auf das Zubereitungsgefäß 31 aufgesetzt werden. Dies wird in der Figur 8 in der verriegelten Stellung ausschnittsweise gezeigt. Das Verriegelungselement 33 liegt so auf der Stufe 8 der Abdeckung 5 auf, dass dadurch die Abdeckung 5 nicht mehr vom Zubereitungsgefäß 31 gelöst werden kann. Die Abdeckung 5 liegt auf dem oberen Rand 22 des Gefäßes mit dem Griff 21 auf.

Dadurch kann das Gefäß mit dem Griff 21 nicht aus dem Zubereitungsgefäß 31 herausgenommen werden. Der Kipphebel 34 wird durch einen seitlich abstehenden Randabschnitt 22a des Gefäßes mit dem Griff 21 betätigt.

Zwar kann die Abdeckung 5 auch ohne Vorhandensein des Gefäßes, das den Griff 21 umfasst, verriegelt werden. Dann allerdings wird der Kipphebel 34 nicht betätigt und damit nicht ausgelöst. Die Steuerungseinrichtung der Küchenmaschine ist zwar so eingerichtet, dass sie dann den verriegelten Zustand erkennt. Gleichzeitig verfügt die Steuerungseinrichtung über die Information, dass der Kipphebel 34 aufgrund des Fehlens des Gefäßes mit dem Griff 21 nicht ausgelöst worden ist. Die Steuerungseinrichtung erkennt daher einen fehlerhaften Zustand.

Das Erkennen des verriegelten Zustands durch die Verriegelungselemente 33 kann über einen Drucksensor erfolgen oder aber beispielsweise über eine Auswertung eines Stromverbrauchs des für die Verriegelung eingesetzten Elektromotors, der eine erhöhte Kraft aufwenden muss, wenn eine Verriegelung stattfindet.

Das Beispiel hat gezeigt, dass zumindest zwei Teile eines mehrteiligen Werkzeugs mit geringem Aufwand überwacht werden können.

Die Figur 9 zeigt einen Gemüseschneider 44. Mit dem Gemüseschneider 44 können aus Gemüse Zoodles hergestellt werden. Der Gemüseschneider 44 kann eine Basisplatte 45 umfassen. Die Basisplatte 45 ist zweckmäßigerweise am Außenumfang kreisrund, wenn auch die Oberseite des Zubereitungsgefäßes kreisrund ist. Ein maximaler Ausumfang der Basisplatte von 20 cm oder von 17 cm sind zweckmäßig, um einen übermäßig großen Bauraum zu vermeiden. Die Basisplatte 45 kann eben, also nicht gewölbt sein. Um einen Halt zu stabilisieren, kann die Basisplatte eine sich beispielsweise nach oben sich erstreckende umlaufende Umrandung 46 aufweisen. Auf der Basisplatte können ein oder zwei zylinderförmige Erhebungen 47 und 48 sowie ein Griff 49 angebracht sein. Die Basisplatte 45 kann zusammen mit den ein oder zwei zylinderförmigen Erhebungen 47 und 48 sowie dem Griff 49 aus Kunststoff hergestellt worden sein. Die Basisplatte 45 kann zusammen mit den ein oder zwei zylinderförmigen Erhebungen 47 und 48 sowie dem Griff 49 in einem Stück hergestellt worden sein. Die Basisplatte 45 kann zusammen mit den zylinderförmigen Erhebungen 47 und 48 sowie dem Griff 49 in einem Arbeitsschritt zum Beispiel durch Spritzguss hergestellt worden sein. Es können aber auch andere Materialien außer Kunststoff vorgesehen sein.

Möglich ist auch eine Herstellung aus Metall, auch wenn dieses Material aus Herstellungsgründen weniger zu bevorzugen ist.

In der Mitte kann die zylinderförmige Erhebung 47 vorgesehen sein, durch die hindurch eine Welle 50 geführt und stabil gehalten sein kann. Auf der zylinderförmigen Erhebung 47 kann ein mit der Welle 50 fest verbundenes Zahnrad 51 drehbar gelagert sein. An der Unterseite der Welle 50 kann eine Kupplung 52 an der Welle 50 angebracht sein. Die Kupplung 52 kann so sein, dass diese beispielsweise mit der in der Figur 5 gezeigten Welle 27 gekuppelt werden kann. Wird die Welle 27 mithilfe des Mischwerkzeugs der Küchenmaschine 30 gedreht, dann wird diese Drehbewegung auf die Welle 50 des Gemüseschneidwerkzeugs 44 übertragen.

Die Welle 50, das Zahnrad 51 und/oder die Kupplung 52 können aus Kunststoff bestehen, um mit geringem technischem Aufwand fertigen zu können. Die Welle 50, das Zahnrad 51 und/oder die Kupplung 52 können aus einem Stück und/oder in einem Arbeitsschritt beispielsweise aus Kunststoff gefertigt worden sein. Andere Materialien wie Metall sind aber grundsätzlich ebenfalls möglich. Der Außendurchmesser der Kupplung 52 kann kleiner als der Innendurchmesser der zylinderförmigen Erhebung 47 sein, damit die Kupplung 52 durch die zylinderförmige Erhebung 47 hindurchgesteckt werden kann. Es handelt sich also um die zylinderförmige Erhebung, die für das Halten der Welle 50 vorgesehen ist. Es kann dann die Welle 50 zusammen mit dem Zahnrad 51 und der Kupplung 52 unabhängig von der Basisplatte hergestellt werden. Möglich ist allerdings auch, dass das Zahnrad 51 einen geringeren Außendurchmesser als der Innendurchmesser der zylinderförmigen Erhebung 47 aufweist, um eine separate Fertigung zu ermöglichen. Dann ist es zweckmäßig, dass die Kupplung 52 einen größeren Außendurchmesser als der Innendurchmesser der zylinderförmigen Erhebung 47 aufweist, um als Anschlag zu dienen. Aus Montagegründen und aus Gründen der Handhabung ist diese Alternative aber weniger zu bevorzugen.

Neben der zylinderförmigen Erhebung 47 kann eine zweite Erhebung 47 für eine drehbare Lagerung eines Spiralschneiders vorgesehen sein. Der Spiralschneider kann einen konusförmigen Grund 53 aufweisen, der sich nach unten verjüngt. Der Spiralschneider kann eine beispielsweise aus Metall bestehende Klinge 54 aufweisen. Die Klinge 54 kann am Grund 53 befestigt sein. An die Schneide der Klinge 54 kann eine Öffnung 55 angrenzen, durch die hindurch geschnittenes Gemüse den Grund 53 passieren kann. Die Öffnung 55 kann in Aufsicht gesehen, wie in der Figur 9 erkennbar, L-förmig sein. Der kurze Schenkel der L-Form kann an den Außenrand des Grunds 53 angrenzen, um ein anfängliches Schneiden von Gemüse erleichtern zu können. Der kurze Schenkel der elf Form kann breiter sein als der lange Schenkel der L-Form, um ein anfängliches Schneiden von Gemüse zu erleichtern. Die Schneide der Klinge 54 kann geradlinig verlaufen. Die Klinge 54 kann sich vom Außenrand des Grunds 53 ausgehend in Richtung Mitte des Grunds 53 erstrecken. Die Klinge 54 kann in etwa bis zur Mitte reichen oder vor der Mitte enden.

Vom Außenrand des Grundes 53 ausgehend kann sich eine Umrandung 56 nach oben erstrecken. Die Außenseite der Umrandung 56 kann Zähne aufweisen. Die Zähne der Umrandung 56 können in die Zähne des Zahnrad 51 so eingreifen, dass eine Drehbewegung des Zahnrad 51 auf den in mit der Umrandung 56 übertragen wird.

Zähne bzw. ein Zahnrad müssen allerdings nicht zwingend vorgesehen sein, um eine Übertragung zu ermöglichen. Beispielsweise ist es auch möglich, dass über einen Riemen eine Drehbewegung der Welle 50 auf den Spiralschneider übertragen wird.

Das Zahnrad 51 kann einen kleineren Durchmesser als die Umrandung 56 des Spiralschneiders aufweisen, damit sich der Spiralschneider langsamer als die Welle 50 drehen kann. Langsame Drehbewegungen des Spiralschneiders sind günstig, um Zoodles schneiden zu können. Im Fall eines Riemenantriebs kann dieser ebenfalls so eingerichtet sein, dass sich der Spiralschneider langsamer dreht als die Welle 50. Entsprechendes kann gelten, falls eine Drehbewegung auf andere Weise von der Welle 50 auf den Spiralschneider übertragen wird, so zum Beispiel mithilfe eines Kettenantriebs.

Der Grund 53 kann zusammen mit der Umrandung 56 in einem Stück und/oder in einem Arbeitsschritt beispielsweise aus Kunststoff gefertigt worden sein. Eine Herstellung durch Spritzguss ist möglich. Da die Klinge 54 zweckmäßigerweise aus einem härteren Material als Kunststoff besteht, ist diese dann in einem weiteren Arbeitsschritt mit dem Grund 53 verbunden worden. Ein Verbinden kann beispielsweise durch Nieten oder Schrauben erfolgt sein. Es ist zweckmäßig, dass die Klinge 54 auf der Oberseite, also im Inneren des Konus förmigen Grundes 53 angebracht worden ist, um Gemüse besonders gut schneiden zu können.

Vorteilhaft kann der Spiralschneider durch Anheben von der zylinderförmigen Erhebung 48 gelöst und in die zylinderförmige Erhebung 48 wieder eingesetzt werden. Der Spiralschneider kann dann vorteilhaft getrennt von den übrigen Teilen des Gemüseschneidwerkzeugs 44 gereinigt werden.

Die zylinderförmige Erhebung 47, die für die Durchführung der Welle 50 vorgesehen ist, befindet sich zweckmäßigerweise zwischen der zylinderförmigen Erhebung 48, die für den Spiralschneider vorgesehen ist, und dem Griff 49. Der Griff 49 kann U-förmig sein, wobei die seitlichen Schenkel der U-Form mit der Basisplatte 45 verbunden sein können. Es kann so ein Greifen erleichtert werden.

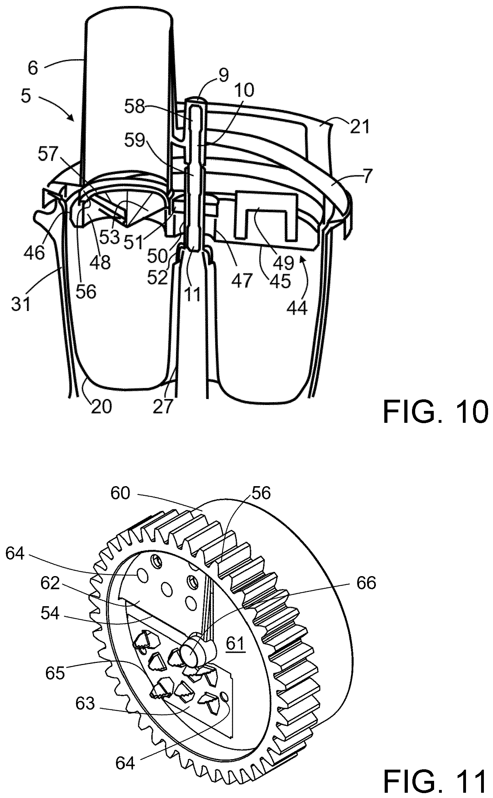

Die Figur 10 zeigt die Küchenmaschine mit dem betriebsbereiten Gemüseschneider 44 aus Figur 9. Der Gemüseschneider 44 ist anstelle einer Schneidscheibe eingesetzt.

Der Spiralschneider kann einen umlaufenden Innenrand 57 aufweisen, der auf die Oberseite der zylinderförmigen Erhebung 48 aufsitzen kann, wie dies in der Figur 10 gezeigt wird. Der Außendurchmesser des Spiralschneiders kann etwas größer sein als der Außendurchmesser der zylinderförmigen Erhebung 48, wie dies in der Figur 10 gezeigt wird. Der umlaufenden Innenrand 57 kann einen Abstand zur Unterseite der Umrandung 56 des Spiralschneiders aufweisen, damit die zylinderförmige Erhebung 48 an die Innenseite der Umrandung 56 des Spiralschneiders angrenzen kann, wie dies in der Figur 10 gezeigt wird. Der Spiralschneider kann so besonders zuverlässig drehbar gehalten werden. Die zylinderförmige Erhebung 48 kann dann in die Umrandung 56 des Spiralschneiders hineinreichen.

Die Welle 50 kann, wie in der Figur 10 gezeigt, eine Hohlwelle sein. Es kann dann der Stab 10 in die Hohlwelle 50 hineinreichen und dadurch den Betrieb stabilisieren. Der Stab 10 kann mehrere zylinderförmige Verdickungen 11, 58, 59 aufweisen. Eine obere Verdickung 58 kann dazu dienen, den Stab zehn dauerhaft im Dom neun halten zu können. Eine mittlere Verdickung 59 und/oder die untere Verdickung 11 können dazu dienen, um die Welle 50 des Gemüseschneiders 44 mit besonders geringem Spiel und dennoch reibungsarm halten zu können.

Der Gemüseschneider 44 kann nur betrieben werden, wenn der Behälter 20 und die Abdeckung 5 vorhanden und verriegelt sind. Für ein Schneiden eines Gemüses befindet sich ein Schacht 6 oberhalb des Spiralschneiders. Gemüse kann dann durch den Schacht 6 zugeführt werden, um Zoodles zu schneiden. Es kann eine Ausrichtungseinrichtung vorhanden sein, um die Abdeckung 5 relativ zum Gemüseschneider 44 entsprechend auszurichten. Beispielsweise ist denkbar, dass die Umrandung 56 des Spiralschneiders in den Schacht 6 hineinreichen muss, um die Abdeckung 5 ordnungsgemäß aufsetzen und verriegeln zu können. Dies wird allerdings nicht in der Figur 10 dargestellt.

Die Figur 11 zeigt einen weiteren Spiralschneider. Mit dem Spiralschneider können Spiralen geschnitten werden. Der Spiralschneider kann einen zylinderförmigen Grundkörper 60 umfassen. Der Grundkörper 60 kann beispielsweise aus Kunststoff gefertigt worden sein. Der Grundkörper 60 kann beispielsweise in die zylinderförmige Erhebung 48 mit geringem Spiel eingesetzt werden und dadurch durch die zylinderförmige Erhebung 48 drehbar gelagert sein. Eine Umrandung 56 mit Zahnrädern kann einteilig mit dem Grundkörper 60 beispielsweise durch Spritzguss gefertigt worden sein. Eine Platte 61 kann beispielsweise einteilig mit der Umrandung 56 verbunden sein. Die Platte 61 kann sich innerhalb der Umrandung 56 befinden. Auch die Platte 61 kann also durch Spritzguss mit der Umrandung 56 und dem Grundkörper 60 in einem Arbeitsschritt gefertigt worden sein.

Die Platte 61 kann während ihrer Herstellung an Einsätze 62 und/oder 63 mit Klingen angespritzt worden sein. Der Einsatz 62 mit einer Klinge 54 und/oder der Einsatz 62 mit ein oder mehreren Klingen 65 können dafür Öffnungen 64 aufweisen, um eine Verbindung durch Einspritzen von Kunststoff in die Öffnungen 64 zu ermöglichen. Der Einsatz 62 mit einer Klinge 54 und/oder der Einsatz 62 mit ein oder mehreren Klingen 65 können aus Metall bestehen.

Beispielsweise der Einsatz 62 mit einer Klinge 54 kann auf der Platte 61 schräg geneigt angebracht worden sein, dass eine Klinge 54 des Einsatzes 62 in eine Ebene oberhalb der Platte 61 reicht. Unterhalb der Klinge 54 kann die Platte 61 so geöffnet sein, dass Schnittgut, also beispielsweise geschnittene Zoodles, die Platte 61 im Anschluss an ein Schneiden durch die Kline 54 passieren kann.

Der andere Einsatz 62 mit ein oder mehreren Klingen 65 kann nach oben abstehende ein oder mehrere Klingen 65 aufweisen. Eine Schneide einer nach oben abstehenden Klinge 65 kann gezackt sein, wie dies in der Figur 11 angedeutet wird. Die gezackte Form kann das Schneiden von Gemüse erleichtern. Die Schneide kann zumindest einen Abschnitt aufweisen, der schräg zur Platte 61 verläuft, um den Kraftauswand für einen Schneiden geringhalten zu können. Die ein oder mehreren Klingen 65 können sich in etwa parallel zum unmittelbar benachbarten Bereich der Umrandung 56 verlaufen, um Schlitze in ein Gemüse wie zum Beispiel Zucchini hineinschneiden zu können. Im Anschluss daran kann der geschlitzte Bereich durch die Klinge 54 vom Gemüse getrennt werden, sodass Zoodles fadenförmig aus dem Gemüse herausgeschnitten werden können. Die ein oder mehreren Klingen 65 können daher in der Ebene enden, in bis zu der die Klinge 54 des anderen Einsatzes 62 reicht. Mehrere Klingen 65 können zum unmittelbar benachbarten Bereich der Umrandung 56 unterschiedliche Abstände aufweisen, um unterschiedliche Schlitze in ein Gemüse schneiden zu können. Diese Abstände zwischen Klingen 65 und benachbarter Umrandung 56 können so gewählt sein, dass Schlitze im Gemüse immer gleich breit sind. Radial gesehen weisen dann benachbarte Klingen 65 gleiche Abstände auf. Es können dann gleich breite fadenförmige Zoodles geschnitten werden. Diese radialen Abstände zwischen zwei benachbarten Klingen 65 können dem Abstand zwischen der Oberfläche der Platte 61 und der Ebene, bis zu der die Klinge 54 reicht, entsprechen. Es können dann gleich breite und gleich tiefe fadenförmige Zoodles geschnitten werden.

Ein Spiralschneider kann nur einen Einsatz mit einer Klinge, und zwar den Einsatz 62 mit der Klinge 54 aufweisen, um Zoodles schneiden zu können. Diese Zoodles werden dann als bandförmige Spiralen geschnitten. Es kann Set von Spiralschneidern vorhanden sein, um wahlweise fadenförmige Zoodles oder bandförmige Zoodles schneiden zu können. Die Spiralschneider des Sets können wie anhand der Figur 11 beschrieben beschaffen sein. Die Spiralschneider des Sets können sich dann nur durch Einsätze 62 und 63 unterscheiden. Der Herstellungsaufwand für einen solchen Spiralschneider kann so geringgehalten werden.

Ein Spiralschneider kann vorzugsweise ohne Werkzeug ausgetauscht werden. Das Küchengerät 30 kann dann wahlweise mit dem einen oder dem anderen Spiralschneider betrieben werden.

Der Spiralschneider kann durch eine Achse alternativ oder ergänzend drehbar gelagert sein. Eine Hülse, in die eine Achse hineingesteckt werden kann, kann auf der Oberseite verschlossen sein, so zum Beispiel durch eine Kappe 66. Die Kappe 66 kann unerwünschte Verschmutzungen vermeiden. Die Kappe 66 kann einen Anschlag für eine Achse bilden.

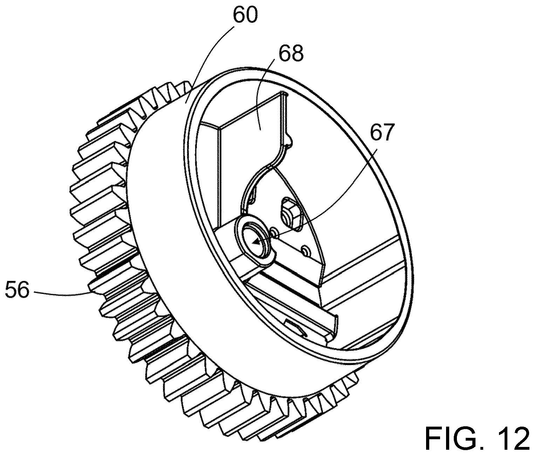

Die Figur 12 zeigt den Spiralschneider aus Figur 11 von der Unterseite. Zu sehen ist eine Öffnung 67 einer Hülse, die beispielsweise mit der Kappe 66 an der Oberseite verschlossen sein kann. Der Spiralschneider kann aus Stabilitätsgründen ein oder mehrere Verstärkungsrippen 68 aufweisen.

Der Spiralschneider kann aus genau zwei oder genau drei Teilen gefertigt worden sein, und zwar aus einem in der Regel aus Kunststoff bestehenden Teil und zwei oder drei in der Regel aus Metall bestehenden Einsätzen 62, 63.

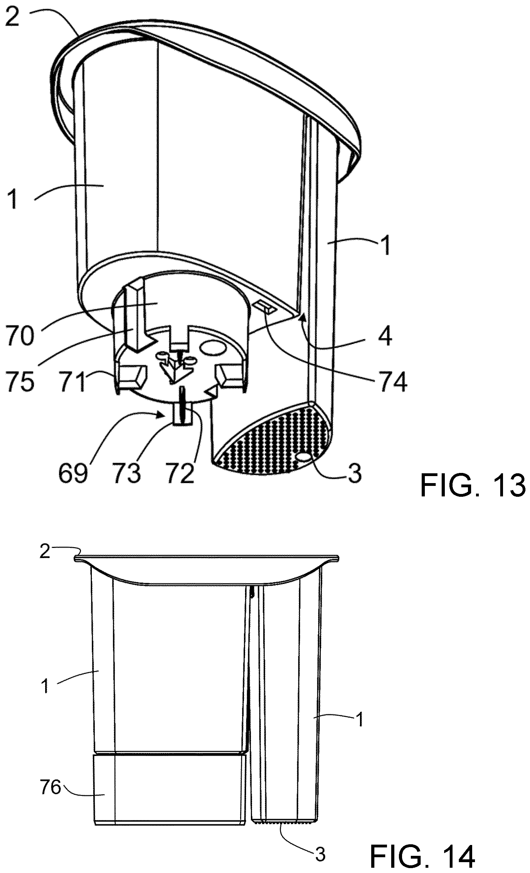

Die Figur 13 zeigt ein Presswerkzeug, das wie im Fall der Figur 1 zwei Stößel 1 haben kann. Das Presswerkzeug kann aber auch nur einen Stößel 1 haben. Sind zwei Stößel 1 vorhanden, so können diese an ihrer Oberseite beispielsweise durch einen umlaufenden Rand 2 fest miteinander verbunden sein. Ein solcher Rand 2 kann wie im Fall der Figur 1 seitlich und am Außenrand zumindest abschnittsweise auch nach unten abstehen, um als Begrenzung und Auflage bei Erreichen einer Endstellung auf der Oberseite eines Schachts 7 dienen zu können. Ist nur ein Stößel 1 vorhanden, dann kann dieser an seiner Oberseite aus vorgenannten Gründen ebenfalls einen abstehenden Rand 2 aufweisen. An der Unterseite kann ein Stößel 1 vorstehende Noppen 3 aufweisen, die ein Lebensmittel fixieren sollen. Sind zwei Stößel 1 vorhanden, so kann zwischen den beiden Stößeln 1, wie im Fall der Figur 1, ein Spalt 4 vorhanden sein. Dieser Spalt 4 kann im Unterschied zur Figur 1 vor dem unteren Ende des einen Stößels 1 enden, der an seiner Unterseite Noppen 3 aufweisen kann. Der andere Stößel 1 kann bei seiner Unterseite eine Halterung 69 aufweisen, die für ein Fixieren eines Endes einer Zucchini vorgesehen. Durch die Halterung soll insbesondere eine Zucchini verdrehsicher gehalten werden, und zwar insbesondere verbessert im Vergleich zu dem Fall, dass an der Unterseite Noppen 3 flächig verteilt angeordnet sind.

Die Halterung 69 kann an der Unterseite eines Podests 70 angebracht sein. Das Podest kann einen kleineren Durchmesser als der darüber befindliche Bereich des Stößels 1 aufweisen. Das Podest 70 kann im Wesentlichen ringförmig sein und damit der Form eines Endes einer Zucchini nahekommen.

Der Durchmesser des Podests 70 kann beispielsweise wenigstens 2 cm oder wenigstens 3 cm oder wenigstens 4 cm betragen, um verbessert Zoodles herstellen zu können. Der Durchmesser des Podests 70 kann beispielsweise nicht mehr als 5 cm oder nicht mehr als 4 cm oder nicht mehr als 3 cm betragen, um verbessert Zoodles herstellen zu können. Das Podest 70 kann wenigstens 5 mm oder wenigstens 1 cm oder wenigstens 2 cm hoch sein. Das Podest 70 kann nicht mehr als 4 cm oder nicht mehr als 3 cm oder nicht mehr als 2 cm hoch sein. Das Podest 70 kann vorgesehen sein, damit der zugehörige Stößel 1 einfacher hinreichend weit bis um Spiralschneider heruntergedrückt werden kann. Das Podest 70 kann vorgesehen sein, um eine Kappe halten zu können, durch die das Presswerkzeug äußerlich dem Presswerkzeug aus Figur 1 gleicht. Ist Kappe angebracht, dann verdeckt die Kappe die Halterung 69 sowie ggfs. das Podest 70.

Die Halterung 69 kann ein oder mehrere nach unten abstehende Stege 71 umfassen, die beispielsweise nach unten von dem Podest 70 abstehen können. Im Unterschied zu Noppen sind Stege 71 nicht gleichmäßig über eine Fläche verteilt angeordnet. Stege 71 können so angeordnet sein, dass das Ende einer Zucchini klemmend zwischen den Stegen 71 gehalten werden kann. Ein oder mehrere Stege 71 können dazu beitragen, dass eine typisch große Zucchini verbessert drehsicher gehalten werden kann. Sind mehrere Stege 71 vorhanden, so können diese ringförmig angeordnet sein und/oder gleich lang sein. Sind mehrere Stege 71 vorhanden, so können diese untereinander einen Abstand von wenigstens 5 mm oder wenigstens 1 cm oder wenigstens 2 cm aufweisen. Sind mehrere Stege 71 vorhanden, so können diese untereinander einen Abstand von nicht mehr als 4 cm oder nicht mehr als 3 cm oder nicht mehr als 2 cm aufweisen. Ein nach unten abstehender Steg 71 kann in seitlicher Aussicht auf den Steg 71 gesehen rechteckig geformt sein. Ein nach unten abstehender Steg 71 kann alternativ stiftförmig sein. Ein Steg 71 kann wenigstens 5 mm oder wenigstens 1 cm lang sein. Ein Steg 71 kann nicht mehr als 3 mm oder nicht mehr als 2 cm lang sein. Die Breite oder der Durchmesser eines Stegs 61 kann kleiner als seine Länge sein.

Ein Schnitt durch einen Steg kann T-förmig sein. Die Vertikale 72 der T-Form kann von oben in das Ende einer Zucchini hineingedrückt werden, um so eine Zucchini verbessert halten zu können. Zwar ist für ein solches Halten die Horizontale 73 eine T-Form nicht zwingend erforderlich und kann also auch entfallen. Aus Stabilitätsgründen ist diese jedoch bevorzugt vorhanden.

Es können wenigstens drei oder vier Stege 71 vorhanden sein, um eine Zucchini zuverlässig verdrehsicher halten zu können. An einer geeigneten unteren Seite des Stoessels eins können ein oder mehrere Öffnungen 74 beispielsweise in Form von Schlitzen vorhanden sein, in die ein oder mehrere entsprechende Laschen einer Kappe beispielsweise lösbar einrasten können, um die Kappe zu halten. Es kann eine Führungsnut 75 seitlich beim Podest 70 vorhanden sein, beispielsweise um ein Führungselement der Kappe führen zu können. In der Figur 14 wird das Presswerkzeug aus Figur 13 mit angebrachter Kappe 76 gezeigt.

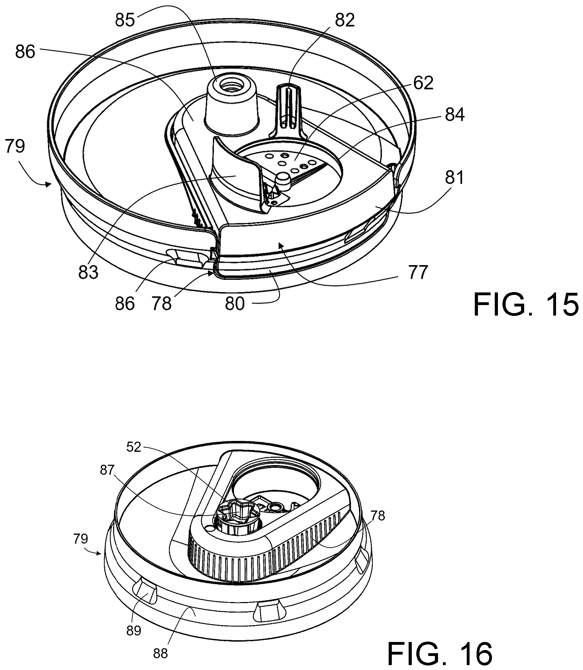

Der Spiralschneider kann in eine Schublade 77 eingesetzt sein, wie dies in der Figur 15 gezeigt wird. Die Schublade 77 kann in einen dafür vorgesehenen Einschub 78 einer Aufnahmeeinrichtung 79 hineingeschoben sein. Der Spiralschneider kann aus der Schublade 77 herausgenommen werden, um gegen ein anderes Werkzeug ausgetauscht werden zu können. Das andere Werkzeug kann ein anderer Spiralschneider sein. Es ist aber auch möglich, dass ein Werkzeug eingesetzt werden kann, welches für andere Zwecke vorgesehen ist. Die Schublade 77 kann gegen ein vergleichbar geformtes Werkzeug ausgetauscht werden, so dass ein im Vergleich zum Spiralschneider deutlich größeres Werkzeug verwendet werden kann. Ein anderes Werkzeug kann eine Reibe oder Reibscheibe sein, mit der beispielsweise Parmesan oder Nüsse zerkleinert werden können.

Die Schublade 77 kann aus einer Unterschale 80 und einer Oberschale 81 zusammengesetzt sein. Die Oberschale 81 kann dann von der Unterschale 80 abgenommen werden, um einen Spiralschneider beispielsweise zu Reinigungszwecken entnehmen und gegebenenfalls gegen ein anderes Werkzeug austauschen zu können. Unterschale 80 und Oberschale 81 können beispielsweise durch Verrasten miteinander lösbar verbunden werden. Es kann aber auch sein, dass die Oberschale 81 auf die Unterschale 80 nur lose aufgesetzt werden kann.

Innerhalb der Schublade 77 kann ein vollständiges Getriebe angeordnet sein. Die Schublade 77 mit dem darin befindlichen Spiralschneider und dem darin befindlichen Getriebe ist dann ein Gemüseschneider im Sinne der vorliegenden Erfindung.

Die Schublade 77 kann sich, wie in der Figur 15 gezeigt wird, ähnlich wie ein Dreieck von der Außenseite nach innen hin verjüngen, um besonders problemlos in den Einschub 78 hineingeschoben werden zu können. Die Schublade 77 kann ähnlich ein Stück einer Torte geformt sein. Die Schublade 77 kann so gestaltet sein, dass diese bei Erreichen einer gewünschten Endstellung im Einschub 78 lösbar einrasten kann, um zuverlässig gehalten zu werden. Der Einschub 78 kann so geformt sein, dass die Schublade 77 nur seitlich, also horizontal, hineingeschoben werden kann. Dies ist zu bevorzugen, damit sich die Schublade nicht unerwünscht während des Betriebs lösen kann. Der Einschub 78 kann aber auch so geformt sein, dass die Schublade 77 alternativ oder ergänzend von oben in den Einschub 78 eingesetzt und in diesem Sinne hineingeschoben werden kann.

Die Schublade 77 kann auf ihrer Oberseite ein oder mehrere Einführhilfen 82, 83 für Schneidgut, also beispielsweise für eine Zucchini oder ein anderes Gemüse, aufweisen. Die ein oder mehreren Einführhilfen 82, 83 können von einer Oberseite der Schublade 77 nach ober abstehen. Eine Einführhilfe 82 kann wie ein Steg geformt sein, der im Schnitt leicht gebogen verlaufen kann. Eine Einführhilfe 83 kann in Aufsicht gesehen wie ein Teilkreis verlaufen. Einführhilfen 82, 83 können angrenzend an eine beispielsweise kreisförmige Öffnung 84 der Schublade 77 angeordnet sein. Die Öffnung 84 ermöglicht einen Zugang von Schneidgut zu den ein oder mehreren Klingen des Spiralschneiders. Es können zwei Einführhilfen 82, 83 genügen. Die beiden Einführhilfen 82, 83 können unterschiedlich sein. Die Einführhilfen 82, 83 können auf einen Halbkreis beschränkt um die Öffnung 84 herum angeordnet sein, um den Durchmesser eines Gemüses nicht zu limitieren, wie dies in der Figur 15 zu sehen ist.

In der Schublade 77 kann zumindest ein Element eines Getriebes für ein Antreiben des Spiralschneiders oder auch eines anderen Werkzeuges integriert sein. Das zumindest eine Element des Getriebes kann ein Zahnrad 51 sein, welches sich beim inneren Ende der Schublade 77 befinden kann. Eine Welle 50 (siehe dazu Figur 9) kann in eine daran angepasste Aufnahme 85 hineinreichen, um die Welle 50 und ein daran befestigte Getriebeelement wie zum Beispiel ein Zahnrad 51 zuverlässig drehbar zu lagern. In der Schublade befindet sich grundsätzlich vollständig das Getriebe, das also zwei unterschiedlich große Zahnräder umfassen kann. Das eine Zahnrad kann das Zahnrad 51 der Welle 50 sein. Das andere Zahnrad kann das Zahnrad der Umrandung 56 des Spiralschneiders sein. Das eine Zahnrad 51 kann wenigstens 15 Zähne aufweisen und/oder nicht mehr als 25 Zähne. Das andere Zahnrad der Umrandung 56 kann wenigstens 35 Zähne und/oder nicht mehr als 45 Zähne aufweisen. Es können so hinreichend kleine und trotzdem hinreichend stabile Zahnräder verwendet werden.

Die Aufnahme 85 kann von einer Oberseite 86 der Schublade 77 nach oben abstehen, wie dies in der Figur 15 gezeigt wird.

Von der Aufnahmeeinrichtung 79 können ein oder mehrere Abstandshalter 86 nach außen abstehen. Die ein oder mehreren Abstandshalter 86 können einen Abstand zu einem Rand eines Behälters 20 sicherstellen, wenn die Aufnahmeeinrichtung 79 in einen solchen Behälter 20 eingesetzt wird. Es kann so vermieden werden, dass die Aufnahmeeinrichtung 79 vollflächig an einer Behälterwand des Behälters 20 anliegt. Dies kann beispielsweise ein Verklemmen mit erhöhtem Risiko zur Folge haben, was durch ein oder mehrere Abstandshalter 86 vermieden werden kann. Ein oder mehrere Abstandshalter 86 können alternativ oder ergänzend dazu dienen, für den Betrieb eine Einsetzausrichtung in einem Behälter 20 festzulegen. Ein Abstandshalter 86 kann wie eine Noppe oder ein Steg geformt sein. Ein Abstandshalter 86 kann von einer Außenwand der Aufnahmeeinrichtung 79 nach außen abstehen.

Die Figur 16 zeigt eine Aufnahmeeinrichtung 79 von der Unterseite. Es gibt eine Öffnung, durch die hindurch die Welle 50 (siehe dazu Figur 9) reichen kann. Beispielsweise die Unterseite des Einschubs 78 weist die Öffnung auf, durch die hindurch die Welle 50 reichen kann. Auch die Schublade 77 weist eine damit korrespondierende Öffnung an ihrer Unterseite auf. Die Welle 50 kann eine Kupplung 52 mit einer beispielsweise sternförmigen Ausnehmung 87 umfassen. Das Kupplungselement 28 der Welle 27 (siehe dazu Figur 5) kann in die Ausnehmung 87 der Kupplung hineingeschoben werden, um eine Drehbewegung der Welle 27 auf das Kupplungselement 28 zu übertragen. Das Kupplungselement 52 kann also drehfest mit der Welle 27 verbunden werden.

Die Aufnahmeeinrichtung kann sich, wie in der Figur 16 gezeigt, zur Unterseite hin verjüngen. Dies vereinfacht das Einsetzen in einen Behälter 20. Die Verjüngung kann Stufen 88 umfassen. Beispielsweise angrenzend an die Unterseite einer Stufe 88 können ein oder mehrere Ausrichtelemente 89 vorhanden sein. Ausrichtelemente 89 können untereinander gleiche Abstände aufweisen. Ausrichtelemente 89 können in etwa dem Abstandshalter 86 gegenüberliegend angeordnet sein. Es können genau ein oder zwei oder drei Abstandshalter 86 und genau zwei oder genau drei oder genau vier Ausrichtelemente vorhanden sein.

Die Unterseite der Aufnahmeeinrichtung 79, beispielsweise die Unterseite des Einschubs 78, weist eine Öffnung für Schnittgut auf, durch die hindurch beispielsweise der Spiralschneider sichtbar ist. Auch die Schublade 77 weist eine damit korrespondierende Öffnung an ihrer Unterseite auf.

Eine Öffnung für Schnittgut kann von einer Öffnung für die Welle 50 getrennt sein. Dies kann beispielsweise für die Unterseite der Schublade 77 gelten, beispielsweise um die Lage der Kupplung 52 zu stabilisieren.

Eine Öffnung für Schnittgut kann zugleich eine Öffnung für die Welle 50 sein. Dies kann beispielsweise zur Vereinfachung einer Fertigung für die Unterseite des Einschubs 78 gelten.

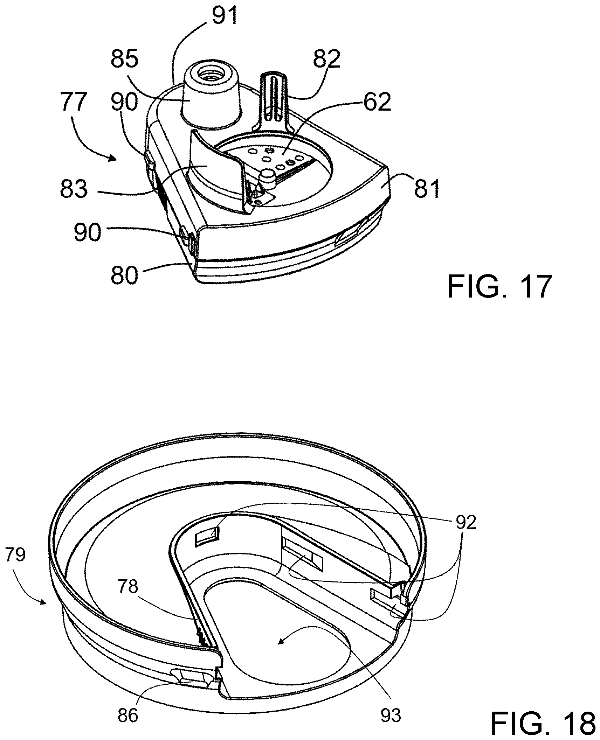

In der Figur 17 wird die Schublade 77 mit einem eingesetzten Spiralschneider gezeigt. Zu sehen ist, dass seitlich von der Schublade 77 ein oder mehrere Rast- und/oder Führungselemente 90 abstehen können. Dass Rastelemente 90 durch ein horizontales Einschieben leicht einrasten können, ist auch deshalb möglich, weil sich die Schublade sich in Einschubrichtung verjüngt, also in Richtung auf das Ende 91. Es kann sich aber auch um Führungselemente 90, die nur einer Führung der Schublade 77 dienen sollen.

Zu sehen ist weiter, dass die Schublade 77 auf der Seite, auf der die Kupplung 52 angeordnet ist, teilkreisförmig, beispielsweise in etwa halbkreisförmig, ist, also ein teilkreisförmiges, insbesondere halbkreisförmiges, Ende 91 aufweist, um das an diese Teilkreisform angepasste Kupplungselement 52 halten und führen zu können.

In Aufsicht auf die Schublade 77 gesehen können die geradlinig verlaufenden Seiten wenigstens 50 mm oder wenigstens 60 mm oder wenigstens 70 mm lang sein. In Aufsicht auf die Schublade 77 gesehen können die geradlinig verlaufenden Seiten nicht länger als 100 mm oder nicht länger 90 mm oder nicht länger als 80 mm lang sein. Die geradlinig verlaufenden Seiten können einen Winkel einschließen, der größer als 20° oder der größer als 25° ist. Die Länge der geradlinig verlaufenden Seiten können 75 mm bis 76 mm betragen. Die geradlinig verlaufenden Seiten können einen Winkel einschließen, der kleiner als 40° oder der kleiner als 35° ist. Der Winkel kann beispielsweise 29 bis 30° betragen. Der Radius der einen Stirnseite, die im eingeschobenen Zustand außen liegt, kann größer als 60 mm oder größer als 70 mm sein. Der Radius der einen Stirnseite, die im eingeschobenen Zustand außen liegt, kann kleiner als 100 mm oder größer als 90 mm sein. Der Radius der einen Stirnseite, die im eingeschobenen Zustand außen liegt, kann 80 bis 82 mm betragen. Der Radius der anderen Stirnseite, die im eingeschobenen Zustand innen liegt, kann größer als 15 mm oder größer als 20 mm sein. Der Radius der anderen Stirnseite, die im eingeschobenen Zustand innen liegt, kann kleiner als 35 mm oder größer als 30 mm sein. Der Radius der anderen Stirnseite, die im eingeschobenen Zustand innen liegt, kann 26 bis 28 mm betragen. Der Durchmesser der Öffnung, durch die hindurch u. a. der Einsatz 62 sichtbar ist, kann wenigstens 35 mm oder wenigstens 40 mm betragen. Der Durchmesser der Öffnung, durch die hindurch u. a. der Einsatz 62 sichtbar ist, kann nicht mehr als 60 mm oder nicht mehr als 55 mm betragen. Diese Abmessungen sind geeignet, um eine typisch große Zucchini schneiden zu können.

In der Figur 18 wird die Aufnahmeeinrichtung 79 gezeigt. Zu sehen ist, dass ein oder mehrere Einrast- und/oder Führungsöffnungen 92 für die Rast- und/oder Führungselemente 90 der Schublade 77 vorhanden sein können. Ein Rastelement 90 kann also in einer Einrastöffnung 92 einrasten. Ein Rastelement 90 kann durch eine Führungsöffnung 92 geführt werden, ohne einrasten zu müssen. Ein oder mehrere Einrast- und/oder Führungsöffnungen können in der Seitenwandung des Einschubs 78 angeordnet sein. Beispielsweise die Unterseite des Einschubs 78 kann eine Öffnung 93 eine Welle 50 oder Kupplung 52 sowie für ein Passieren von Schnittgut aufweisen.

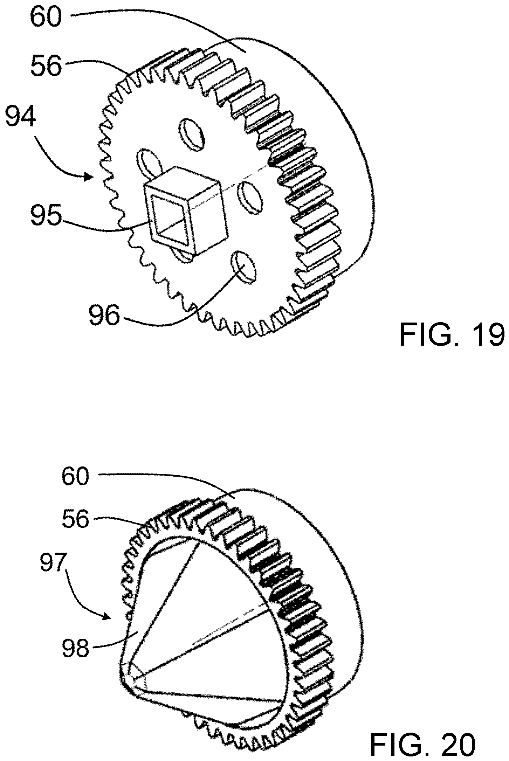

In der Figur 19 wird ein Adapter 94 gezeigt, der in die Schublade 77 anstelle eines Spiralschneiders eingesetzt werden kann. Die äußeren Abmessungen des Grundkörpers 60 und der Umrandung 56 des Adapters 94 stimmen daher mit den äußeren Abmessungen eines Spiralschneiders, wie dieser beispielsweise in der Figur 11 gezeigt wird, so überein, dass ein Austausch möglich ist. Der Adapter kann ein zentrale Adapterschnittstelle 95 aufweisen, die beispielsweise quadratisch sein kann, um eine Drehbewegung auf ein damit verbindbares Werkzeug übertragen zu können. Alternativ oder ergänzend kann der Adapter ringförmig um das Zentrum verteilt Adapterschnittstellen 96 aufweisen, in die Kupplungselemente eines damit verbindbaren Werkzeugs eingreifen können. Die ringförmig verteilten Adapterschnittstellen 95 können kreisförmige Löcher sein. Auch anders geformte oder anders angeordnete Adapterschnittstellen können auf der Oberseite des Adapters vorgesehen sein.

In der Figur 20 wird ein Presswerkzeug 97 mit einem Presskegel 98 gezeigt, der in die Schublade 77 anstelle eines Spiralschneiders oder Adapters 94 eingesetzt werden kann. Die äußeren Abmessungen des Grundkörpers 60 und der Umrandung 56 des Presskegels 97 stimmen daher mit den äußeren Abmessungen eines Spiralschneiders, wie dieser beispielsweise in der Figur 11 gezeigt wird, so überein, dass ein Austausch möglich ist. Der Presskegel 98 kann nach oben abstehen. Es können zwischen der Umrandung 56 und dem Presskegel 98 ein oder mehrere Ablauföffnungen 99 vorhanden sein. Über die ein oder mehreren Ablauföffnungen 99 kann beispielsweise Saft nach unten ablaufen, der mithilfe des Presskegels 98 beispielweise aus Zitrusfrüchten wie Zitrone herausgepresst worden ist. Die Umrandung 56 kann so nach oben gegenüber dem angrenzenden Rand des Presskegels 98 nach oben vorstehen, dass eine Flüssigkeit wie Saft grundsätzlich nicht über die Umrandung 56 hinaus abfließen wird.

Ein Gemüseschneider oder ein damit austauschbares Werkzeug kann auch anders als bisher beschrieben mit einem Motor eines Küchengeräts verbunden werden. Es ist möglich, dass ein Gemüseschneider während des Betriebs oberhalb eines Zubereitungsgefäß eines Küchengeräts befindet. Grundsätzlich sind beliebige Anordnungen im/auf/innerhalb/oberhalb/teilweiseinnerhalb/teilweiseoberhalb, eines Küchengeräts möglich. Eine seitliche Anordnung ist ebenfalls mit Hilfe eines entsprechend konstruierten Getriebes möglich.

## Patentansprüche

1. Küchengerät (30) mit einem Zubereitungsgefäß (31), einem Deckel (32), der auf das Zubereitungsgefäß (31) aufgesetzt werden kann, einem Werkzeug, das anstelle des Deckels (32) auf das Zubereitungsgefäß (31) aufgesetzt werden kann, wobei das Werkzeug ein erstes Teil (5) und ein zweites Teil (20 bis 26) umfasst, mit einer Verriegelungseinrichtung für ein Verriegeln des auf das Zubereitungsgefäß (31) aufgesetzten Deckels (32), mit einem Sensor (34), der ausgelöst ist, wenn der aufgesetzte Deckel (32) durch die Verriegelungseinrichtung verriegelt ist, **dadurch gekennzeichnet, dass** das Werkzeug einen Spiralschneider umfasst.

2. Küchengerät (30) nach dem vorhergehenden Anspruch, **dadurch gekennzeichnet, dass** die Verriegelungseinrichtung für ein Verriegeln des auf das Zubereitungsgefäß (31) aufgesetzten Werkzeugs eingerichtet ist und der Sensor (34), ausgelöst ist, wenn das aufgesetzte Werkzeug durch die Verriegelungseinrichtung verriegelt ist, wobei der Sensor (34) nicht ausgelöst ist, wenn nur ein Teil des Werkzeugs (5) aufgesetzt ist.

3. Küchengerät (30) nach einem der vorhergehenden Ansprüche, **dadurch gekennzeichnet, dass** der Spiralschneider einen Konus förmigen Grund 53 mit einer Klinge (54) und einer an die Klinge (54) angrenzenden Öffnung (55) aufweist.

4. Küchengerät (30) nach dem vorhergehenden Anspruch, **dadurch gekennzeichnet, dass** die Öffnung (55) L-förmig ist und ein Schenkel der L-Form an den Außenrand des Grunds angrenzt.

5. Küchengerät (30) nach einem der vorhergehenden Ansprüche, **dadurch gekennzeichnet, dass** der Spiralschneider Teil eines Gemüseschneiders (44) ist und ein umlaufender Innenrand (57) des Spiralschneiders auf einer zylinderförmigen Erhebung (48) des Gemüseschneiders (44) aufsitzt.

6. Küchengerät (30) nach einem der vorhergehenden Ansprüche, **dadurch gekennzeichnet, dass** der Spiralschneider Teil eines Gemüseschneiders (44) ist und der Gemüseschneider eine Basisplatte (45) und einen an der Basisplatte (45) angebrachten Griff umfasst.

7. Küchengerät (30) nach einem der vorhergehenden Ansprüche, **dadurch gekennzeichnet, dass** der Spiralschneider Teil eines Gemüseschneiders (44) ist und der Gemüseschneider eine Welle (50) umfasst, durch die der neben der Welle angeordnete Spiralschneider angetrieben wird.

8. Küchengerät (30) nach dem vorhergehenden Anspruch, **dadurch gekennzeichnet, dass** der Spiralschneider während des Betriebs über ein Getriebe (51, 56) so angetrieben wird, dass der Spiralschneider sich langsamer dreht als die Welle (50).

9. Küchengerät (30) nach einem der zwei vorhergehenden Ansprüche, **dadurch gekennzeichnet, dass** die Welle (50) an der Unterseite eine Kupplung (52) aufweist.

10. Küchengerät (30) nach einem der drei vorhergehenden Ansprüche, **dadurch gekennzeichnet, dass** die Welle (50) eine Hohlwelle ist, in die während des Betriebs ein Stab (10) des Werkzeugs hineinreicht.

11. Küchengerät (30) nach einem der vorhergehenden Ansprüche, **dadurch gekennzeichnet, dass** die Verriegelungseinrichtung so beschaffen ist, dass das Werkzeug im aufgesetzten Zustand durch das Verriegeln von einer Ausgangsstellung in eine Endstellung bewegt wird, und der Sensor (34) ausgelöst ist, wenn sich das Werkzeug in der Endstellung befindet.

12. Küchengerät (30) nach dem vorhergehenden Anspruch, **dadurch gekennzeichnet, dass** die Verriegelungseinrichtung so beschaffen ist, dass das erste Teil (5) des Werkzeugs durch das Verriegeln von der Ausgangsstellung in die Endstellung bewegt wird und das erste Teil (5) so beschaffen ist, dass dieses durch das Verriegeln das zweite Teil (20 bis 26) des Werkzeugs von der Ausgangsstellung in die Endstellung bewegt, und das zweite Teil (20 bis 26) so beschaffen ist, dass dieses den Sensor (34) ausgelöst hat, wenn das zweite Teil (20 bis 26) sich in seiner Endstellung befindet, wobei das zweite Teil ein Behälter (20) und das erste Teil eine Abdeckung (5) für den Behälter ist.

13. Küchengerät (30) nach einem der vorhergehenden Ansprüche, **dadurch gekennzeichnet, dass** das Werkzeug einen Spiralschneider, eine Abdeckung (5), einen Behälter (20) und eine Schneidscheibe (14) umfasst, wobei das Werkzeug wahlweise mit dem Spiralschneider oder mit der Schneidscheibe (14) betrieben werden kann.

14. Gemüseschneider (44) für ein Küchengerät nach einem der vorhergehenden Ansprüche, **dadurch gekennzeichnet, dass** der Gemüseschneider (44) eine ebene Basisplatte (45) aufweist, die am Außenumfang kreisrund ist, wobei auf der Basisplatte (45) zwei zylinderförmige Erhebungen (47, 48) und ein Griff (49) angebracht sind, wobei eine Welle des Gemüseschneiders (44) durch die eine zylinderförmige Erhebungen (47, 48) hindurchgeführt oder hindurchführbar ist und ein Spiralschneider des Gemüseschneiders auf die andere zylinderförmige Erhebung (48) drehbar aufgesetzt ist, wobei der Spiralschneider über ein Getriebe (51, 56) so angetrieben wird, dass der Spiralschneider langsamer als die Welle (50) gedreht wird.

15. Werkzeug mit einem Gemüseschneider (44) nach dem vorhergehenden Anspruch mit einer Abdeckung (5) und einem Behälter (20) und einer Schneidscheibe (14), wobei das Werkzeug wahlweise mit dem Gemüseschneider oder mit der Schneidscheibe (14) betrieben werden kann.
